(19)

Europäisches
Patentamt
European
Patent Office
Office européen
des brevets

(11)  **EP 3 783 716 A1**

(12)  **EUROPEAN PATENT APPLICATION**
published in accordance with Art. 153(4) EPC

(43) Date of publication:
    **24.02.2021 Bulletin 2021/08**

(21) Application number: **19789154.2**

(22) Date of filing: **18.04.2019**

(51) Int Cl.:
    *H01M 10/052* [(2010.01)]     *H01G 11/06* [(2013.01)]
    *H01G 11/26* [(2013.01)]     *H01G 11/30* [(2013.01)]
    *H01G 11/50* [(2013.01)]     *H01G 11/70* [(2013.01)]
    *H01G 11/86* [(2013.01)]     *H01M 10/058* [(2010.01)]

(86) International application number:
    **PCT/JP2019/016626**

(87) International publication number:
    **WO 2019/203301 (24.10.2019 Gazette 2019/43)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(30) Priority: **19.04.2018  JP 2018080711
            31.08.2018  JP 2018163231**

(71) Applicant: **JM Energy Corporation
    Hokuto-shi, Yamanashi 409-1501 (JP)**

(72) Inventors:
    • **YAKUSHIJI, Hiroki
      Tokyo 105-8640 (JP)**

    • **AITA, Kazunari
      Tokyo 105-8640 (JP)**
    • **UTAKA, Tomohiro
      Tokyo 105-8640 (JP)**
    • **NAOI, Masaya
      Tokyo 105-8640 (JP)**
    • **KOJIMA, Kenji
      Tokyo 105-8640 (JP)**
    • **YAMAMOTO, Norihiro
      Tokyo 105-8640 (JP)**
    • **ANDO, Nobuo
      Tokyo 105-8640 (JP)**

(74) Representative: **TBK
    Bavariaring 4-6
    80336 München (DE)**

(54)  **LITHIUM-ION SECONDARY BATTERY, LITHIUM-ION CAPACITOR, AND METHODS FOR MANUFACTURING SAME**

(57)    A lithium ion rechargeable battery includes an electrode assembly and an electrolyte solution. A negative electrode includes a negative electrode current collector and a negative electrode active material layer formed on a surface of the negative electrode. The negative electrode is doped with lithium. An aperture ratio of the negative electrode current collector is 0% or higher and 0.1% or lower. A discharge capacity ratio X, which is defined by Formula (1): X = C1/ C2, is greater than 0, and 0.9 or less. C1 in the Formula (1) is a discharge capacity of a cell when the cell is charged and discharged at a cell voltage between 2.0 V and 4.3 V. C2 in the Formula (1) is a discharge capacity of the negative electrode when the negative electrode is charged and discharged between 0V vs. Li/Li+ and 3V vs. Li/Li+.

**Description**

CROSS-REFERENCE TO RELATED APPLICATIONS

This international application claims the benefit of Japanese Patent Application No. 2018-80711 filed on April 19, 2018 and Japanese Patent Application No. 2018-163231 filed on August 31, 2018 with the Japan Patent Office, and the entire disclosure of Japanese Patent Application No. 2018-80711 and Japanese Patent Application No. 2018-163231 are incorporated in the present international application by reference.

TECHNICAL FIELD

The present disclosure relates to a lithium ion rechargeable battery, a lithium ion capacitor, and a method of manufacturing the lithium ion rechargeable battery and the lithium ion capacitor.

BACKGROUND ART

Electronic devices have been remarkably downsized and light-weighted in recent years. As a result of the downsizing and light-weighting of the electronic devices, there are further increasing demands for also downsizing and light-weighting batteries that are used as power sources for driving the electronic devices.

In order to satisfy the demands for downsizing and light-weighting the batteries, a nonaqueous electrolyte rechargeable battery has been developed. An example of the nonaqueous electrolyte rechargeable battery is a lithium ion rechargeable battery. Further, lithium ion capacitors have been known as power storage devices adapted for applications that require high energy density characteristics and high output characteristics.

In such a battery and/or a capacitor, a process of doping an alkali metal with an electrode active material in advance is adopted for various purposes. The process of doping the alkali metal with the electrode active material in advance is called pre-doping.

For example, in a lithium ion capacitor, the pre-doping with lithium is performed for the purpose of reducing a negative electrode potential and increasing an energy density. According to a main method of pre-doping in above-mentioned case, a current collector including a through-hole is used to perform pre-doping on the negative electrode active material in a cell (see for example, Patent Document 1).

Further, in the lithium ion rechargeable battery, the pre-doping is performed for the purpose of reducing irreversible capacity of the negative electrode. In this case, as a method of the pre-doping, known other than the above method is a method of performing the pre-doping on the negative electrode active material in advance of assembling the battery (see for example, Patent Documents 2 and 3).

PRIOR ART DOCUMENTS

PATENT DOCUMENTS

Patent Document 1: Japanese Unexamined Patent Application Publication No. 2007-67105
Patent Document 2: Japanese Unexamined Patent Application Publication No. H07-235330
Patent Document 3: Japanese Unexamined Patent Application Publication No. H09-293499

SUMMARY OF THE INVENTION

PROBLEMS TO BE SOLVED BY THE INVENTION

Lithium ion rechargeable batteries disclosed in Patent Documents 2 to 4 have problems of poor cycle characteristics. Furthermore, in general, cycle characteristics and an energy density are in a tradeoff relation and therefore, it has been difficult to improve the both.

In one aspect of the present disclosure, it is desirable to provide a lithium ion rechargeable battery and a lithium ion capacitor with good cycle characteristics and a high energy density, and to also provide a method of manufacturing such a lithium ion rechargeable battery and a lithium ion capacitor.

MEANS FOR SOLVING THE PROBLEMS

One aspect of the present disclosure is a lithium ion rechargeable battery that comprises: an electrode assembly comprising a positive electrode and a negative electrode; and an electrolyte. The negative electrode comprises a negative electrode current collector and a negative electrode active material layer formed on a surface of the negative electrode current collector. The negative electrode is doped with lithium. An aperture ratio of the negative electrode current collector is 0% or higher and 0.1% or lower. A discharge capacity ratio X is greater than 0, and 0.9 or lower. The discharge capacity ratio X is defined by Formula (1) below.

$$\text{Formula (1): } X = C1/ C2$$

C1 in the Formula (1) is a discharge capacity of a cell when the cell is charged and discharged at a cell voltage between 2.0 V and 4.3 V. C2 in the Formula (1) is a discharge capacity of the negative electrode when the negative electrode is charged and discharged between 0V vs. Li/Li+ and 3V vs. Li/Li+. The cell voltage shows a potential difference between the positive electrode and the negative electrode.

The lithium ion rechargeable battery, which is one aspect of the present disclosure, is good in cycle characteristics and high in energy density.

Another aspect of the present disclosure is a method of manufacturing a lithium ion rechargeable battery that comprises an electrode cell. According to this method, a negative electrode, which comprises a negative electrode current collector and a negative electrode active material layer formed on a surface of the negative electrode current collector, is doped with lithium. The negative electrode, which has been doped with lithium, and a positive electrode are stacked to form the electrode cell. An aperture ratio of the negative electrode current collector is 0% or higher and 0.1% or lower. A discharge capacity ratio X is greater than 0, and 0.9 or lower. The discharge capacity ratio X is defined by Formula (1) below.

$$\text{Formula (1): } X = C1/ C2$$

C1 in the Formula (1) is a discharge capacity of a cell when the cell is charged and discharged at a cell voltage between 2.0 V and 4.3 V. C2 in the Formula (1) is a discharge capacity of the negative electrode when the negative electrode is charged and discharged between 0V vs. Li/Li+ and 3V vs. Li/Li+. The unit of the C1 and the C2 is expressed in mAh or Ah.

According to the method of manufacturing the lithium ion rechargeable battery, which is another aspect of the present disclosure, a lithium ion rechargeable battery with good cycle characteristics and a high energy density can be manufactured.

Another aspect of the present disclosure is a lithium ion capacitor that comprises: an electrode assembly comprising a positive electrode and a negative electrode; and an electrolyte. The negative electrode comprises a negative electrode current collector and a negative electrode active material layer formed on a surface of the negative electrode current collector. The negative electrode is doped with lithium. An aperture ratio of the negative electrode current collector is 0% or higher and 0.1% or lower. A discharge capacity ratio X is 0.05 or higher and 0.2 or lower. The discharge capacity ratio X is defined by Formula (3) below.

$$\text{Formula (3): } X = C1/ C2$$

C1 in the Formula (3) is a discharge capacity of a cell when the cell is charged and discharged at a cell voltage between 2.2 V and 3.8 V. C2 in the Formula (3) is a discharge capacity of the negative electrode when the negative electrode is charged and discharged between 0V vs. Li/Li+ and 3V vs. Li/Li+. The unit of the C1 and the C2 is expressed in mAh or Ah.

The lithium ion capacitor, which is another aspect of the present disclosure, is good in cycle characteristics and high in energy density.

Another aspect of the present disclosure is a method of manufacturing a lithium ion capacitor. The lithium ion capacitor comprises: an electrode assembly comprising a negative electrode and an electrode different from the negative electrode; and an electrolyte. The negative electrode comprises a negative electrode current collector and a negative electrode active material layer formed on a surface of the negative electrode current collector. According to the method, the negative electrode is doped with lithium. The negative electrode, which has been doped with lithium, and the electrode different form the negative electrode are stacked to form the electrode assembly. An aperture ratio of the negative electrode current collector is 0% or higher and 0.1% or lower. A discharge capacity ratio X is 0.005 or higher and 0.2 or lower. The discharge capacity ratio X is defined by Formula (3) below.

$$\text{Formula (3):} \quad X = C1/C2$$

C1 in the Formula (3) is a discharge capacity of a cell when the cell is charged and discharged at a cell voltage between 2.2 V and 3.8 V. C2 in the Formula (3) is a discharge capacity of the negative electrode when the negative electrode is charged and discharged between 0V vs. Li/Li+ and 3V vs. Li/Li+. The unit of the C1 and the C2 is expressed in mAh or Ah.

According to the method of manufacturing the lithium ion capacitor, which is another aspect of the present disclosure, a lithium ion capacitor with good cycle characteristics and a high energy density can be manufactured.

BRIEF DESCRIPTION OF THE DRAWINGS

FIG. 1 is an explanatory diagram showing a configuration of an electrode manufacturing apparatus.
FIG. 2A is a plan view showing a configuration of a part of a strip-like electrode and a configuration of a part of a strip-like power storage device negative electrode, which is pre-doped.
FIG. 2B is a sectional view along a line IIB-IIB in FIG. 2A.

EXPLANATION OF REFERENCE NUMERALS

1...electrode manufacturing apparatus, 3, 5...electrolyte solution tank, 7...cleaning tank, 9, 11, 13, 15, 17, 19, 21, 23, 25, 27, 29, 31, 33, 35, 37, 39, 41, 43, 45...conveyor roller, 47...supply roll, 49...wind-up roll, 51...counter electrode member, 53...porous insulating member, 55...supporting table, 57...circulation filter, 61...direct current power source, 63...blower, 67, 68...supporting rod, 69...partition plate, 70...supporting rod, 71...space, 73...electrode, 75...power storage device negative electrode, 81...filter, 83...pump, 85...piping, 93...negative electrode current collector, 95...negative electrode active material layer

MODE FOR CARRYING OUT THE INVENTION

Example embodiments of the present disclosure will be described with reference to the drawings.

1. Power Storage Device

(1-1) Overall Configuration of Power Storage Device

A power storage device of the present disclosure comprises an electrode assembly and an electrolyte. The electrode assembly comprises a positive electrode and a negative electrode. The negative electrode comprises a negative electrode current collector and a negative electrode active material layer. The negative electrode active material layer is formed on a surface of the negative electrode current collector. The negative electrode is doped with lithium.

In the present specification, "positive electrode" means an electrode disposed on a side from which an electric current flows out during discharging, and into which an electric current flows during charging. In the present specification, "negative electrode" means an electrode disposed on a side into which an electric current flows during discharging, and from which an electric current flows out during charging.

In the present specification, "doped with lithium" means a state in which lithium is occluded, intercalated, adsorbed, carried, alloyed, or inserted in various types of states, such as a metallic state, an ionic state, and a state of compound. Examples of being "doped" include a phenomenon in which at least one of lithium or anions enters a positive electrode active material and a phenomenon in which lithium ions enter a negative electrode active material. "Dedoping" means removal and release. Examples of "dedoping" include a phenomenon in which lithium ions or anion is removed from the positive electrode active material and a phenomenon in which lithium ions are removed from the negative electrode active material.

An example of a method of pre-doping the negative electrode with lithium may be to electrically connect the negative electrode and a lithium electrode to each other using an electrode manufacturing apparatus, to thereby dope the negative electrode with lithium. The lithium electrode includes metal lithium.

The power storage device of the present disclosure can be manufactured as follows, for example. A positive electrode active material layer is formed on a surface of the positive electrode current collector to manufacture the positive electrode. The negative electrode active material layer is formed on the surface of the negative electrode current collector to manufacture the negative electrode. The negative electrode is doped with lithium. In order to dope the negative electrode with lithium, a doping unit can be used, for example. The doping unit comprises, for example, a doping tank, a conveyer assembly, a counter electrode member, a connector, and a porous insulating member.

The doping tank stores a solution containing lithium ions. The conveyer assembly conveys an electrode along a path that runs through the doping tank. The counter electrode member is accommodated in the doping tank. The connector electrically connects the electrode and the counter electrode member with each other. The porous insulating member is arranged between the electrode and the counter electrode member. The porous insulating member is not in contact with the electrode.

Subsequently, the positive electrode, a first separator, the negative electrode, and a second separator are sequentially stacked to form a laminate. The laminate is, for example, three or more stacked units, each of which includes the positive electrode, the first separator, the negative electrode, and the second separator. Example forms of the laminate include a plate, a sheet, and a wound-form. The laminate corresponds to the electrode assembly.

Subsequently, the electrode assembly is sealed in an outer container. The outer container is in the form of, for example, a square, a cylinder, and a laminate. The outer container may be a film or a can. Then, the outer container is filled with an electrolyte solution. Through the above processes, the power storage device is completed.

In the case of a lithium ion rechargeable battery, the ratio of doping the negative electrode active material layer with lithium is preferably 5% or more and 95% or less relative to a discharge capacity C2 of the negative electrode, more preferably 15% or more and 90% or less, further more preferably 25% or more and 80% or less, and particularly preferably 25% or more and 75% or less in order to improve both an energy density and cycle characteristics with a good balance therebetween. Due to the ratio of doping the negative electrode active material layer with lithium being 5% or more and 95% or less relative to the discharge capacity C2 of the negative electrode, the lithium ion rechargeable battery has advantageous cycle characteristics and a high energy density. The ratio of doping the negative electrode active material layer with lithium is a ratio of a doping amount of lithium into the negative electrode active material layer relative to the discharge capacity C2 of the negative electrode. The doping amount of lithium into the negative electrode active material layer is a value obtained by dividing a capacity of an electric current used for doping with lithium by a mass of a negative electrode active material. The doping amount of lithium into the negative electrode active material layer is expressed in a unit of mAh/g.

In the case of a lithium ion capacitor, the ratio of doping the negative electrode active material layer with lithium is preferably 30% or more and 95% or less of the discharge capacity C2 of the negative electrode. In this case, a capacity of the negative electrode and a cycle durability are both increased. The discharge capacity C2 of the negative electrode is a discharge capacity of the negative electrode when the negative electrode is charged and discharged between 0V vs. Li/Li+ and 3V vs. Li/Li+.

The discharge capacity C2 of the negative electrode is a discharge capacity of the negative electrode when the negative electrode is charged and discharged between 0V vs. Li/Li+ and 3V vs. Li/Li+.

The power storage device of the present disclosure can comprise, for example, basically the same configuration as the power storage device disclosed in JP2004-266091A.

(1-2) Specific Examples of Power Storage Device

Examples of the power storage device of the present disclosure include the lithium ion capacitor and the lithium ion rechargeable battery. In the present specification, the lithium ion rechargeable battery means a power storage device in which the positive electrode and the negative electrode are non-polarizable electrodes and lithium ions are contained. In the present specification, the lithium ion capacitor means a power storage device in which the positive electrode is a polarizable electrode, the negative electrode is a non-polarizable electrode, and lithium ions are contained.

(1-3) Current Collector

In the present specification, "current collector" means both of the positive electrode current collector and the negative electrode current collector. The positive electrode comprises the positive electrode current collector that receives and distributes electricity. The negative electrode comprises the negative electrode current collector that receives and distributes electricity.

(1-4) Positive Electrode Current Collector

Examples of a material for the positive electrode current collector include aluminum and stainless steel. The material for the positive electrode current collector is preferably aluminum. The thickness of the positive electrode current collector is not particularly limited, but preferably in the range of 1 $\mu$m or larger and 50 $\mu$m or smaller, more preferably in the range of 5 μm or larger and 40 μm or smaller, and particularly preferably in the range of 10 μm or larger and 40 μm or smaller.

The positive electrode current collector has an aperture ratio (hereinafter referred to as positive electrode current collector aperture ratio) of preferably 0% or higher and 0.1% or lower, and more preferably 0%. The positive electrode current collector aperture ratio can be obtained by Formula (4) below.

$$\text{Formula (4): positive electrode current collector aperture ratio (\%)} = [1- (\text{mass of positive electrode current collector}/ \text{absolute specific gravity of positive electrode current collector})/ (\text{apparent volume of positive electrode current collector})] \times 100$$

In the Formula (4), "absolute specific gravity of positive electrode current collector" is a mass per unit volume of the positive electrode current collector that is not perforated, specifically, a mass per unit volume of a material forming the positive electrode current collector. "Apparent volume of positive electrode current collector" is a volume of the positive electrode current collector based on an assumption that the positive electrode current collector is not perforated. "Apparent volume of positive electrode current collector" is a volume obtained by measuring the vertical dimension, the lateral dimension, and the thickness dimension of the positive electrode current collector, and by calculation based on the measured values. The aperture ratio of the positive electrode current collector of 0% or higher and 0.1% or lower facilitates coating of the positive electrode current collector with the positive electrode active material layer.

(1-5) Positive Electrode Active Material

For the positive electrode active material of the lithium ion rechargeable battery, a substance that can allow reversible doping and dedoping with at least one type of anions, such as lithium, tetrafluoroborate, is used. Examples of the positive electrode active material include transition metal oxides, such as cobalt oxide, nickel oxide, manganese oxide, vanadium oxide; and sulfur-based active materials, such as a sulfur simple material and metal sulfide. The positive electrode active material and the negative electrode active material each may consist of a single substance or a mixture of two or more substances. The specific surface area of lithium cobalt oxide is preferably 0.1 m$^2$/g or larger and 30 m$^2$/g or smaller.

The material for the positive electrode of the lithium ion capacitor is preferably a material having a large specific surface area, such as activated carbon and a polyacene-based organic semiconductor.

The activated carbon is in the form of, for example, powder. Further, the activated carbon has a volume average particle size (D50) of preferably 3 μm or larger and 30 μm or smaller from the aspect of the filling density of the activated carbon. If the specific surface area and the volume average particle size (D50) of the activated carbon are within the above-described range, the energy density of the power storage device is further improved. A value of the volume average particle size (D50) is obtained by a laser diffraction/scattering method. The specific surface area of the activated carbon is preferably 1900 m$^2$/g or larger and 3000 m$^2$/g or smaller, and more preferably 1950 m$^2$/g or larger and 2800 m$^2$/g or smaller.

The polyacene-based organic semiconductor is a heat-treated product of aromatic condensation polymer. The polyacene-based organic semiconductor includes a polyacene-based frame structure. In the polyacene-based frame structure, the atomic ratio between hydrogen atoms and carbon atoms is 0.05 or more and 0.50 or less. The atomic ratio between hydrogen atoms and carbon atoms is a value obtained by dividing the number of hydrogen atoms by the number of carbon atoms.

(1-6) Positive Electrode Active Material Layer

The positive electrode active material layer is formed by attaching the positive electrode active material to the positive electrode current collector. Examples of a method of attaching the positive electrode active material include coating, printing, injecting, spraying, vapor deposition, and pressure bonding.

The positive electrode active material layer has a thickness of preferably 10 μm or larger and 250 μm or smaller, more preferably 25 μm or larger and 200 μm or smaller, and particularly preferably 50 μm or larger and 280 μm or smaller.

If the positive electrode active material layer is formed on each side of the positive electrode, the thickness of the positive electrode active material layer means a sum of respective thicknesses of the positive electrode active material layers formed on both sides of the positive electrode. If the positive electrode active material layer is formed on only one side of the positive electrode, the thickness of the positive electrode active material layer means a thickness of the positive electrode active material layer formed on the one side of the positive electrode. If the thickness of the positive electrode active material layer is within the above-described ranges, a capacity of the positive electrode can be increased and resistance can be decreased.

The positive electrode active material layer has a densify of preferably 0.1 g/cm$^3$ or higher and 5g/cm$^3$ or lower, more preferably 1 g/cm$^3$ or higher and 4.5 g/cm$^3$ or lower, and particularly preferably 2 g/cm$^3$ or higher and 4 g/cm$^3$ or lower. If the density of the positive electrode active material layer is within the above-described ranges, the energy density of the power storage device increases, which improves the cycle characteristics of the power storage device.

The density of the positive electrode active material layer can be measured by the following method. The power storage device is disassembled to obtain the positive electrode. The obtained positive electrode undergoes a cleaning process with diethyl carbonate and is vacuum dried at 100 °C. The mass of the positive electrode active material layer and the external volume of positive electrode active material are measured. The mass of the positive electrode active material layer is divided by the external volume of the positive electrode active material layer to obtain the density of the positive electrode active material layer. "External volume of positive electrode active material layer" is a volume obtained by measuring the vertical dimension, the lateral dimension, and the thickness dimension of the positive electrode active material layer, and by calculation based on the measured values.

An example of a method of setting the thickness and the density of the positive electrode active material layer within the above-described respective ranges may be a method in which the positive electrode active material layer is roll-pressed. If the positive electrode active material layer is roll-pressed, the thickness and the density of the positive electrode active material layer are those of the roll-pressed positive electrode active material layer. The conditions for roll-pressing are not particularly limited. In general, the roll temperature is 10 °C or higher and 50 °C or lower, the line pressure is 0.1 t/c or higher and 10 t/c or lower, and the feed speed is 0.01 m/min or higher and 10 m/min or lower.

The positive electrode active material layer has a coating weight of preferably 10 g/m$^2$ or more and 1000 g/m$^2$ or less, and more preferably 20 g/m$^2$ or more and 800 /m$^2$ or less. If the positive electrode active material layer is formed on each side of the positive electrode, the coating weight of the positive electrode active material layer means a sum of respective coating weights of the positive electrode active material layers formed on both sides of the positive electrode. If the positive electrode active material layer is formed on only one side of the positive electrode, the coating weight of the positive electrode active material layer means a coating weight of the positive electrode active material layer formed on the one side of the positive electrode.

If the coating weight of the positive electrode active material layer is within the above-described ranges, the energy density of the power storage device increases, which improves the cycle characteristics of the power storage device.

The coating weight of the positive electrode active material layer can be measured by the following method. The power storage device is disassembled to obtain the positive electrode. The obtained positive electrode undergoes a cleaning process with diethyl carbonate and is vacuum dried at 100 °C. A measurement sample having a specified area is punched out from the positive electrode to measure its mass. Then, in the measurement sample, the positive electrode active material layer is peeled off from the positive electrode current collector and the mass of the remaining positive electrode current collector is measured. The mass of the remainder of the positive electrode current collector is subtracted from the mass of the measurement sample to calculate the mass of the positive electrode active material layer. The mass of positive electrode active material layer is divided by the area of the measurement sample to calculate the coating weight of the positive electrode active material layer.

(1-7) Negative Electrode Current Collector

For the negative electrode current collector, stainless steel, copper, nickel, and the like can be used. The thickness of the negative electrode current collector is not particularly limited. The thickness of the negative electrode current collector is, in general, 1 μm or larger and 50 μm or smaller, and particularly preferably 5 μm or larger and 20 μm or smaller.

The negative electrode current collector has an aperture ratio (hereinafter referred to as negative electrode current collector aperture ratio) of 0% or higher and 0.1% or lower. The negative electrode current collector aperture ratio is preferably 0% or higher and 0.05% or lower, and more preferably 0%. If the negative electrode current collector does not include a through-hole, the negative electrode current collector aperture ratio is 0%. The negative electrode current collector aperture ratio can be obtained by Formula (4) below.

Formula (4): Negative electrode current collector aperture ratio (%) = [1- (mass of negative electrode current collector/ absolute specific gravity of negative electrode current collector)/ (apparent volume of negative electrode current collector)] x 100

In the Formula (4), "absolute specific gravity of negative electrode current collector" is a mass per unit volume of the negative electrode current collector that is not perforated, specifically, a mass per unit volume of a material forming the negative electrode current collector. "Apparent volume of negative electrode current collector" is a volume of the negative electrode current collector based on an assumption that the negative electrode current collector is not perforated. "Apparent volume of negative electrode current collector" is a volume obtained by measuring the vertical dimension, the lateral dimension, and the thickness dimension of the negative electrode current collector, and by calculation based on the measured values.

The upper limit of negative electrode current collector aperture ratio is preferably 0.05%, and particularly preferably 0%. If the negative electrode current collector aperture ratio is within the above-described ranges, an electrode strength of the negative electrode current collector can be maintained even if the thickness of the negative electrode current collector is small. Consequently, the negative electrode current collector is inhibited from being broken during manufacturing of the electrode and a cell. Furthermore, if the negative electrode current collector aperture ratio is within the above-described ranges, the resistance of the negative electrode can be decreased.

(1-8) Negative Electrode Active Material

For the negative electrode active material of the lithium ion rechargeable battery, it is possible to use a substance that can allow reversible doping and dedoping with lithium. Examples of the negative electrode active material include a silicon-based material, a carbon-based material, and a silicon-carbon composite material. Examples of the silicon-based material include Si, SiO, and SiOC. An example of the carbon-based material may be graphite-based particles. Examples of the graphite-based particles include graphite-based composite particles and polyacene-based organic semiconductor (PAS). An example of the silicon-carbon composite material may be silicon-based material with which a carbon-based material is coated. Further, the content of silicon in the silicon-carbon composite material is preferably 5% by mass or more and 99% by mass or less, and more preferably 20% by mass or more and 90% by mass or less.

Examples of the silicon-based material can include a silicon simple material, silicon oxide, and silicon alloy. In addition, the silicon material disclosed in JP2004-185810A can be used as the silicon-based material. The above-described silicon oxide is preferably silicon oxide that is expressed as a composition formula of $SiO_x$ ($0<x<2$, and preferably $0.1 \leqq x \leqq 1$). The above-described silicon alloy is preferably an alloy of silicon and at least one type of transition metal selected from the group consisting of titanium, zirconium, nickel, copper, iron, and molybdenum. These transition metal silicides are advantageously used since they have a high degree of electrical conductivity and a high strength. Due to an active material containing such a transition metal, the transition metal present in a surface of the active material is oxidized, resulting in an oxide having a hydroxyl group in its surface, which further improves the binding force between the negative electrode active material and a binder. The transition metal silicide is also preferable from this aspect. For the silicon alloy, it is more preferable to use a silicon-nickel alloy or a silicon-titanium alloy. It is particularly preferable to use the silicon-titanium alloy. The content of silicon in the silicon alloy relative to all the metal elements in the silicon alloy is preferably 10 mol% or higher, and more particularly 20 to 70 mol%. The active material containing a silicon atom may be a single crystal, a polycrystal, or amorphous.

The graphite-based composite particles each comprise a core particle and a graphitized substance covering a surface of the core particle. Examples of the core particle include graphite, hardly graphitizable carbon, and natural graphite. Examples of the graphitized substance include graphitized substances deriving from tar or pitch.

The volume average particle size (D50), which is a particle size corresponding to an integration value of a particle size distribution of a graphite-based particle of 50%, is preferably 1.0 $\mu$m or larger and 35 $\mu$m or smaller, and more preferably 2 $\mu$m or larger and 30 $\mu$m or smaller. If the volume average particle size (D50) of the graphite-based particle is 1.0 $\mu$m or larger, it is easy to manufacture the graphite-based particle. Furthermore, if the volume average particle size (D50) of the graphite-based particle is 1.0 $\mu$m or larger, gas is unlikely to be generated during charging, which consequently improves durability of the power storage device. The volume average particle size (D50) of the graphite-based particle is a value obtained by the laser diffraction/scattering method.

The polyacene-based organic semiconductor is a heat-treated product of aromatic condensation polymer. The polyacene-based organic semiconductor includes a polyacene-based frame structure. In the polyacene-based frame structure, the atomic ratio between hydrogen atoms and carbon atoms is 0.05 or more and 0.50 or less. The atomic ratio between hydrogen atoms and carbon atoms is a value obtained by dividing the number of hydrogen atoms by the number of carbon atoms.

The silicon-carbon composite material is a material in which a silicon-based material and a carbon-based material are combined. An example of the silicon-carbon composite material may be the above-described silicon-based material with which the above-described carbon-based material is coated.

The above-described aromatic condensation polymer is a condensation product of an aromatic hydrocarbon compound and aldehydes. Examples of the aromatic hydrocarbon compound include phenol, cresol, and xylenol. Examples of the aldehydes include formaldehyde, acetaldehyde, and furfural.

The negative electrode active material has a specific surface area of preferably 0.1 $m^2$/g or larger and 200 $m^2$/g or smaller, and more preferably 0.5 $m^2$/g or larger and 50 $m^2$/g or smaller. If the specific surface area of the negative electrode active material is 0.1 $m^2$/g or larger, resistance of the achieved power storage device decreases. If the specific surface area of the negative electrode active material is 200 $m^2$/g or smaller, irreversible capacity during charging of the achieved power storage device decreases and gas is unlikely to be generated during charging. Consequently, the durability of the power storage device increases.

Examples of a material for the negative electrode of the lithium ion capacitor include a carbon-based material and a silicon-based material. Examples of the carbon-based material include graphite-based composite particles and a polyacene-based organic semiconductor (PAS). Examples of the silicon-based material include Si, SiO, and SiOC.

The graphite-based composite particles each comprise a core particle and a graphitized substance covering a surface of the core particle. Examples of the core particle include graphite, hardly graphitizable carbon, and natural graphite. Examples of the graphitized substance include graphitized substances deriving from tar or pitch.

The polyacene-based organic semiconductor is a heat-treated product of aromatic condensation polymer. The polyacene-based organic semiconductor includes a polyacene-based frame structure. In the polyacene-based frame structure, the atomic ratio between hydrogen atoms and carbon atoms is 0.05 or more and 0.50 or less. The atomic ratio between hydrogen atoms and carbon atoms is a value obtained by dividing the number of hydrogen atoms by the number of carbon atoms.

(1-9) Negative Electrode Active Material Layer

The negative electrode active material layer is formed by attaching the negative electrode active material to the surface of the negative electrode current collector. Examples of a method of attaching the negative electrode active material include coating, printing, injecting, spraying, vapor deposition, and pressure bonding.

If the negative electrode is used for manufacturing the electrode of the lithium ion rechargeable battery, the density of the negative electrode active material layer is preferably 1.50 g/cm$^3$ or higher and 2.00 g/cm$^3$ or lower, and more preferably 1.60 g/cm$^3$ or higher and 1.90 g/cm$^3$ or lower.

The negative electrode active material layer preferably includes a silicon-based material or a silicon-carbon composite material. The content of the silicon-based material or the silicon-carbon composite material in the negative electrode active material layer is preferably 5% by mass or more and 99% by mass or less, more preferably 20% by mass or more and 90% by mass or less, and further more preferably 30% by mass or more and 80% by mass or less. If the content of the silicon-based material in the negative electrode active material layer is within the above-described ranges, the capacity of the negative electrode further increases.

The negative electrode active material layer has a coating weight of preferably 5 g/m$^2$ or more and 500 g/m$^2$ or less, more preferably 20 g/m$^2$ or more and 400 g/m$^2$ or less, and further more preferably 30 g/m$^2$ or more and 300 g/m$^2$ or less.

If the negative electrode active material layer is formed on each side of the negative electrode, the coating weight of the negative electrode active material layer means a sum of respective coating weights of the negative electrode active material layers formed on both sides of the negative electrode. If the negative electrode active material layer is formed on only one side of the negative electrode, the coating weight of the negative electrode active material layer means a coating weight of the negative electrode active material layer formed on the one side of the negative electrode.

If the coating weight of the negative electrode active material layer is within the above-described ranges, the capacity of the negative electrode and the cycle characteristics of the power storage device are improved. If the content of the silicon-based material in the negative electrode active material layer is 5% by mass or more and 99% by mass or less and the coating weight of the negative electrode active material layer is within the above-described ranges, the capacity of the negative electrode and the cycle characteristics of the power storage device are further improved. The coating weight of the negative electrode active material layer can be measured by the same method as with the coating weight of the positive electrode active material layer.

The negative electrode active material layer has a thickness of preferably 3 μm or larger and 300 μm or smaller, more preferably 10 μm or larger and 250 μm or smaller, and further more preferably 25 μm or larger and 200 μm or smaller.

If the negative electrode active material layer is formed on each side of the negative electrode, the thickness of the negative electrode active material layer means a sum of respective thicknesses of the negative electrode active material layers formed on both side of the negative electrode. If the negative electrode active material layer is formed on only one side of the negative electrode, the thickness of the negative electrode active material layer means a thickness of the negative electrode active material layer formed on the one side of the negative electrode.

If the thickness of the negative electrode active material layer is within the above-described ranges, the capacity of the negative electrode and the cycle characteristics of the power storage device are improved. If the content of the silicon-based material in the negative electrode active material layer is 5% by mass or more and 99% by mass or less and the thickness of the negative electrode active material layer is within the above-described ranges, the capacity of the negative electrode and the cycle characteristics of the power storage device are further improved.

An example method of setting the thickness and the density of the negative electrode active material layer within the above-described respective ranges may be a method in which the negative electrode active material layer is roll-pressed. If the negative electrode active material layer is roll-pressed, the thickness and the density of the negative electrode active material layer are those of the roll-pressed negative electrode active material layer. The conditions for roll-pressing are not particularly limited. In general, the roll temperature is 10 °C or higher and 50 °C or lower, the line pressure is 0.1 t/c or higher and 10 t/c or lower, and the feed speed is 0.01 m/min or higher and 10 m/min or lower.

(1-10) Manufacturing of Positive Electrode and Negative Electrode

The positive electrode with the positive electrode active material layer and the negative electrode with the negative electrode active material layer, which are described above, can be manufactured by a known method.

The positive electrode can be manufactured as follows, for example. The positive electrode active material, a binder, and a solvent are mixed to prepare a positive electrode slurry. The positive electrode slurry may further contain a conductive material and a thickener as needed.

The positive electrode with the positive electrode active material layer can be manufactured by a method in which the positive electrode slurry is applied on the positive electrode current collector. The positive electrode with the positive electrode active material layer can be also manufactured by a method in which the positive electrode slurry is formed into a sheet-like shape and the sheet-shaped molded product is adhered to the positive electrode current collector.

The negative electrode can be manufactured as follows, for example. The negative electrode active material, a binder, and a solvent are mixed to prepare a negative electrode slurry. The negative electrode slurry may further contain a conductive material and a thickener as needed.

The negative electrode with the negative electrode active material layer can be manufactured by a method in which the negative electrode slurry is applied on the negative electrode current collector. The negative electrode with the negative electrode active material layer can be also manufactured by a method in which the negative electrode slurry is formed into a sheet-like shape and the sheet-like molded product is adhered to the negative electrode current collector.

Examples of the binder contained in the positive electrode slurry or the negative electrode slurry include a rubber-based binder, fluorine-containing resin, and acrylic resin. An example of the rubber-based binder may be SBR. Examples of the fluorine-containing resin include fluorine-containing resin obtained by seed polymerization of, for example, polytetrafluoroethylene and/or polyvinylidene fluoride with acrylic resin.

Examples of the solvent contained in the positive electrode slurry or the negative electrode slurry include water and an organic solvent. Examples of the conductive material contained in the positive electrode slurry or the negative electrode slurry include acetylene black, Ketjen black, graphite, and metal powder. An example of the thickener contained in the positive electrode slurry or the negative electrode slurry may be carboxymethyl cellulose (CMC).

The addition amount of the binder and the conductive material in the positive electrode slurry or the negative electrode slurry can be suitably adjusted depending on the electric conductivities of the active materials to be used, the shape of the electrodes to be made, and so on. The addition amount of the binder and the conductive material is generally preferably 2% by mass or more and 20% by mass or less relative to the active material, and particularly preferably 2% by mass or more and 10% by mass or less. The active material means the positive electrode active material and/or the negative electrode active material.

(1-11) Separator

The material for the separator in the power storage device of the present disclosure is preferably a separator having an air permeance in the range of 1 sec or more and 200 sec or less. The air permeance is a value measured by a method in accordance with JIS P8117.

The separator can be suitably selected and used among from, for example, nonwoven fabrics and microporous films made of polyethylene, polypropylene, polyester, cellulose, polyolefin, and cellulose/rayon. For the separator, nonwoven fabrics made of polyethylene, polypropylene, and cellulose/rayon are particularly preferable.

The separator has a thickness of, for example, 5 $\mu$m or larger and 20 $\mu$m or smaller, and preferably 5 $\mu$m or larger and 15 $\mu$m or smaller. If the thickness of the separator is 5 $\mu$m or larger, short-circuit is unlikely to occur. If the thickness of the separator is 20 $\mu$m or smaller, the resistance becomes low.

(1-12) Electrolyte

In the power storage device of the present disclosure, it is possible to use, for the electrolyte, an electrolyte solution, a solid electrolyte, or a gel electrolyte can be used, for example.

For the electrolyte solution, it is possible to use, for example, an electrolyte solution containing an aprotic organic solvent in which lithium salt is dissolved. The electrolyte solution contains the aprotic organic solvent, for example. Examples of the aprotic organic solvent include cyclic carbonate and chain carbonate. Examples of the cyclic carbonate include ethylene carbonate (EC), propylene carbonate (PC), and butylene carbonate. Examples of the chain carbonate include dimethyl carbonate (DMC), ethyl methyl carbonate (EMC), diethyl carbonate (DEC), and methyl propyl carbonate. The electrolyte solution may be a mixed solvent in which two or more types of the above-described substances are mixed.

The aprotic organic solvent may contain an organic solvent other than the cyclic carbonate and the chain carbonate. Examples of the organic solvent other than the cyclic carbonate and the chain carbonate include cyclic ester, chain carboxylic acid ester, and chain ether. An example of the cyclic ester may be $\gamma$-butyrolactone. An example of the chain carboxylic acid ester may be ethyl propionate. An example of the chain ether may be dimethoxyethane.

The electrolyte solution contains lithium salt. Examples of the lithium salt include $LiClO_4$, $LiAsF_6$, $LiBF_4$, $LiPF_6$, $LiN(C_2F_5SO_2)_2$, and $LiN(CF_3SO_2)_2$.

The lithium salt is particularly preferably $LiPF_6$. LiPF6 is high in ion conductivity and low in resistance. The concentration of the lithium salt in the electrolyte solution is preferably 0.1 mol/L or higher, and more preferably 0.5 mol/L or higher and 5 mol/L or lower. If the concentration of the lithium salt in the electrolyte solution is within the above-described ranges, the internal resistance of the power storage device can be decreased.

Examples of the solid electrolyte include an inorganic solid electrolyte material, a sulfide solid electrolyte material, and a solid polymer-based material. In such a solid electrolyte, it is also possible to have the above-described electrolyte solution swelled.

Examples of the gel electrolyte include polyethylene oxide, polyacrylonitrile, polyvinylidene fluoride, polymethyl methacrylate. In such a gel electrolyte, it is possible to add an organic solvent as a plasticizer and adjust its solidity, and also to have the above-described electrolyte solution swelled.

(1-13) Discharge Capacity Ratio X in Lithium Ion Rechargeable Battery

The discharge capacity ratio X in the lithium ion rechargeable battery can be defined by Formula (1) below.

$$\text{Formula (1)}: X = C1/C2$$

C1 in Formula (1) is a discharge capacity of the cell when the cell is charged and discharged at a cell voltage between 2.0 V and 4.3 V.

C2 in Formula (1) is a discharge capacity of the negative electrode when the negative electrode is charged and discharged between 0V vs. Li/Li+ and 3V vs. Li/Li+. The unit of C1 and C2 is expressed in mAh or Ah.

C1 in the above-described Formula (1) is measured by the method below, for example. The lithium ion rechargeable battery is charged until the voltage becomes 4.3V at a constant current that allows the lithium ion rechargeable battery to be discharged until the cell voltage becomes 2.0V from 4.3V for 10$\pm$1 hours, and is thereafter charged at a constant voltage of 4.3 V until the current is reduced to one-tenth of the initial current (constant current-constant voltage mode). From the above-described charged state, the lithium ion rechargeable battery is discharged at the constant current described above until the voltage becomes 2.0V. A discharge capacity of the cell resulting from the above is defined as C1.

C2 in the above-described Formula (1) is measured by the method below, for example. A cell, in which metal lithium is disposed at a counter electrode of a negative electrode, is charged until the voltage becomes 0V at a constant current that allows the cell to be discharged until the voltage becomes 3.0V from 0V for 10$\pm$1 hours, and is thereafter charged at a constant voltage of 0 V until the current is reduced to one-tenth of the initial current. From the above-described charged state, the cell is discharged at the constant current described above until the voltage becomes 3.0V. A discharge capacity of the negative electrode resulting from above is defined as C2.

The negative electrode to be targeted for measurement may be a sample collected from the electrode, which is the condition before the cell is fabricated, or a sample collected by disassembling the cell.

In addition, C2 may be obtained as follows. A part of the targeted negative electrode is cut out. After the discharge capacity is measured to obtain a discharge capacity per unit area, the discharge capacity per unit area is multiplied by an area of the negative electrode in the cell.

If the power storage device of the present disclosure is the lithium ion rechargeable battery, the discharge capacity ratio X of the lithium ion rechargeable battery exceeds 0, and 0.9 or lower, more preferably 0.25 or higher and 0.8 or lower, further more preferably 0.3 or higher and 0.7 or lower, and particularly preferably 0.35 or higher and 0.55 or lower. Due to the discharge capacity ratio X being within the above-described ranges, the lithium ion rechargeable battery has advantageous cycle characteristics and a high energy density. In order to improve the energy density of the lithium ion rechargeable battery, the discharge capacity ratio X is more preferably 0.5 or higher and 0.9 lower, further more preferably 0.6 or higher and 0.88 or lower, particularly preferably 0.7 or higher and 0.85 or lower. If the discharge capacity ratio X is within the above-described ranges, the energy density of the lithium ion rechargeable battery is further improved. In order to improve the cycle characteristics of the lithium ion rechargeable battery, the discharge capacity ratio X is more preferably 0.1 or higher and 0.6 or lower, further more preferably 0.2 or higher and 0.6 or lower, and particularly preferably 0.2 or higher and 0.5 or lower. If the discharge capacity ratio X is within the above-described ranges, the cycle characteristics of the lithium ion rechargeable battery is further improved.

(1-14) Discharge Capacity Ratio Y in Lithium Ion Rechargeable Battery

The discharge capacity ratio X in the lithium ion rechargeable battery is defined by Formula (2) below.

$$\text{Formula (2): } Y = C3/ C2$$

C2 in the above-described Formula (2) is the same as the discharge capacity C2 of the negative electrode in Formula (1). C3 in the above-described Formula (2) is a discharge capacity C3 of the negative electrode removed from the cell with the cell voltage being 4.3V.

C3 in the above-described Formula (2) is measured by the following method, for example. A cell, in which metal lithium is disposed at a counter electrode of a negative electrode, is discharged at a constant current until the voltage becomes 3.0V. A discharge capacity of the negative electrode resulting from above is defined as C3.

In addition, C3 may be obtained as follows. A part of the targeted negative electrode may be cut out. After the discharge capacity is measured to obtain a discharge capacity per unit area, the discharge capacity per unit area is multiplied by an area of the negative electrode in the cell.

If the power storage device of the present disclosure is the lithium ion rechargeable battery, the discharge capacity ratio Y of the lithium ion rechargeable battery is preferably 0.7 or higher and 1.0 or lower. Due to the discharge capacity ratio Y being within the above-described ranges, the lithium ion rechargeable battery has advantageous cycle characteristics and a high energy density.

Among the conditions for manufacturing the power storage device, the more the coating weight of the negative electrode active material increases, the higher the discharge capacity ratio X becomes.

(1-15) Discharge Capacity Ratio X in Lithium Ion Capacitor

The discharge capacity ratio X in the lithium ion capacitor is defined by Formula (3) below.

$$\text{Formula (3) } X = C1/ C2$$

C1 in the above-described Formula (3) is the discharge capacity of the cell when the cell is charged and discharged at a cell voltage between 2.2 V and 3.8 V. C2 in the above-described Formula (3) is the discharge capacity of the negative electrode when the negative electrode is charged and discharged between 0V vs. Li/Li+ and 3V vs. Li/Li+. The unit of C1 and C2 is expressed in mAh/g.

If the power storage device of the present disclosure is the lithium ion capacitor, the discharge capacity ratio X of the lithium ion capacitor is 0.005 or higher and 0.2 or lower. With the discharge capacity ratio X of 0.005 or higher and 0.2 or lower, the lithium ion capacitor has advantageous cycle characteristics and is high in energy density. Further, the discharge capacity ratio X is more preferably 0.007 or higher and 0.18, and further more preferably 0.008 or higher and 0.15 or lower. If the discharge capacity ratio X is within the above-described ranges, the cycle characteristics of the lithium ion capacitor is further improved and the energy density of the lithium ion capacitor is further improved.

Among the conditions for manufacturing the power storage device, the more the coating weight of the negative electrode active material increases, the more the discharge capacity ratio X increases.

2. Method of Manufacturing Power Storage Device Negative Electrode

(2-1) Configuration of Electrode Manufacturing Apparatus 1

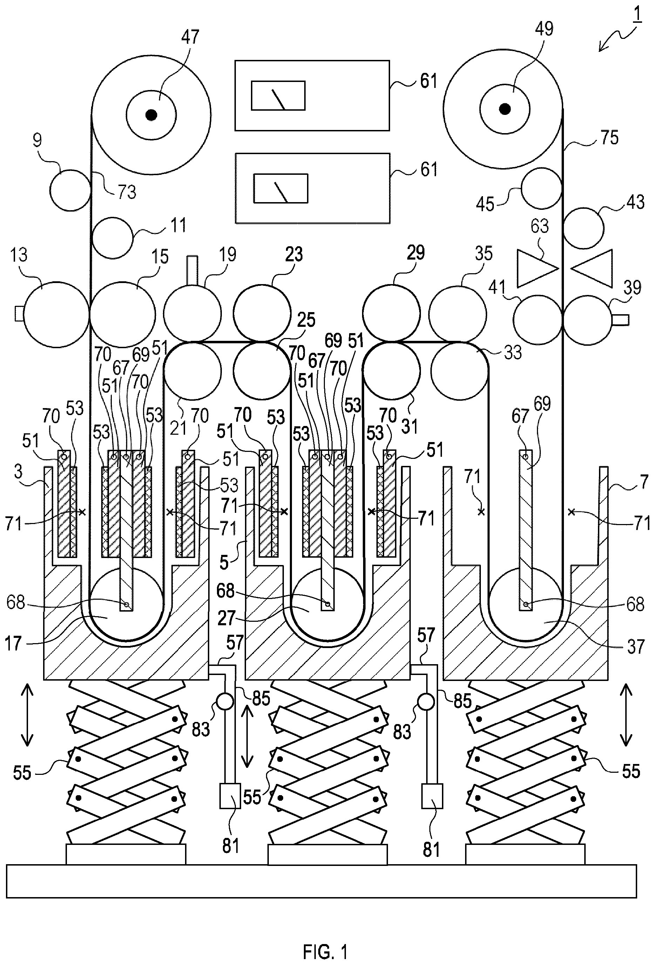

A negative electrode (hereinafter also referred to as power storage device negative electrode) with which the power storage device is provided can be manufactured by, for example, an electrode manufacturing apparatus 1 shown in FIG. 1.

The configuration of the electrode manufacturing apparatus 1 will be described based on FIG. 1. The electrode manufacturing apparatus 1 comprises electrolyte solution tanks 3, 5; a cleaning tank 7; conveyor rollers 9, 11, 13, 15, 17, 19, 21, 23, 25, 27, 29, 31, 33, 35, 37, 39, 41, 43, 45 (hereinafter also collectively referred to as group of conveyor rollers); a supply roll 47; a wind-up roll 49, counter electrode members 51; porous insulating members 53, supporting tables 55, circulation filters 57, two direct current power sources 61, and a blower 63.

The electrolyte solution tank 3 is an upwardly open rectangular tank. The bottom surface of the electrolyte solution tank 3 has an approximately U-shaped cross-section. In the electrolyte solution tank 3, there are a partition plate 69, four counter electrode members 51, four porous insulating members 53, and the conveyor roller 17.

The partition plate 69 is supported by a supporting rod 67 that penetrates the upper end of the partition plate 69. The supporting rod 67 is secured to a wall or the like, which is not shown. The partition plate 69, except for the upper end thereof, is located inside the electrolyte solution tank 3. The partition plate 69 extends in up-down directions and divides the interior of the electrolyte solution tank 3 into two spaces. At the lower end of the partition plate 69, the conveyor roller 17 is attached. The partition plate 69 and the conveyor roller 17 are secured by the supporting rod 68 that penetrates the partition plate 69 and the conveyor roller 17. The partition plate 69 is notched in the vicinity of the lower end thereof so as not to contact the conveyor roller 17. There is a space between the conveyor roller 17 and the bottom surface of the electrolyte solution tank 3.

The four counter electrode members 51 are supported by respective supporting rods 70 penetrating the upper ends of the counter electrode members 51 and extend in the up-down directions. The supporting rods 70 are secured to walls or the like, which are not shown. The counter electrode members 51, except for the upper ends thereof, are located inside the electrolyte solution tank 3. Two out of the four counter electrode members 51 are disposed to sandwich the partition plate 69 from both sides. The remaining two counter electrode members 51 are disposed along the inner surface of the electrolyte solution tank 3.

There are spaces 71 between the counter electrode member 51 disposed beside the partition plate 69 and the counter electrode member 51 disposed along the inner surface of the electrolyte solution tank 3. The counter electrode members 51 are connected to the positive poles of the direct current power source 61. The detailed configuration of the counter electrode members 51 will be described later.

The porous insulating members 53 are attached to respective surfaces of the counter electrode members 51 located closer to the spaces 71. The detailed configuration of the porous insulating members 53 will be described later.

The cleaning tank 7 has basically the same configuration as the configuration of the electrolyte solution tank 3. However, the cleaning tank 7 does not include therein the counter electrode members 51 and the porous insulating members 53.

The electrolyte solution tank 5 has basically the same configuration as the configuration of the electrolyte solution tank 3. However, the electrolyte solution tank 5 includes therein a conveyor roller 27 in replacement of the conveyor roller 17.

The group of conveyor rollers conveys an electrode 73, which will be described later, along a specified path. The path extends from the supply roll 47, sequentially passes through the electrolyte solution tank 3, the electrolyte solution tank 5, and the cleaning tank 7, and reaches the wind-up roll 49.

A portion of the path passing through the electrolyte solution tank 3 first goes downward through the space 71 between the porous insulating member 53, which is attached along the inner surface of the electrolyte solution tank 3, and the porous insulating member 53, which is located beside the partition plate 69 and faces the former porous insulating member 53, then is changed in direction of movement to upward by the conveyor roller 17, and finally moves upward through the space 71 between the porous insulating member 53, which is attached along the inner surface of the electrolyte solution tank 3, and the porous insulating member 53, which is located beside the partition plate 69 and faces the former porous insulating member 53.

A portion of the above-described path passing through the electrolyte solution tank 5 first goes downward through the space 71 between the porous insulating member 53, which is attached along the inner surface of the electrolyte solution tank 5, and the porous insulating member 53, which is located beside the partition plate 69 and faces the former porous insulating member 53, then is changed in direction of movement to upward by the conveyor roller 27, and finally goes upward through the space 71 between the porous insulating member 53, which is attached along the inner surface of the electrolyte solution tank 5, and the porous insulating member 53, which is located beside the partition plate 69 and faces the former porous insulating member 53.

A portion of the above-described path passing through the cleaning tank 7 first goes downward between the inner surface of the cleaning tank 7 and the partition plate 69, then is changed in direction of movement to upward by the conveyor roller 37, and finally goes upward between the inner surface of the cleaning tank 7 and the partition plate 69.

Among the group of conveyor rollers, the conveyor rollers 15, 21, 25, 29 are made of a conductive material. The conveyor rollers 15, 21, 25, 29 are connected to the negative poles of the direct current power source 61. The conveyor roller 13 presses the electrode 73 toward the conveyor roller 15. The conveyor roller 19 presses the electrode 73 toward the conveyor roller 21. The conveyor roller 23 presses the electrode 73 toward the conveyor roller 25. The conveyor roller 31 presses the electrode 73 toward the conveyor roller 29. The group of conveyor rollers corresponds to the conveyer assembly. The conveyor rollers 15, 21, 25, 29 are conductive conveyor rollers and correspond to connectors.

The conveyor rollers 13, 19, 23, 31, except for shaft portions thereof, are made of elastomer. That is, the conveyor rollers 13, 19, 23, 31 including the surfaces thereof, are made of elastomer. The elastomer is one example of an elastic body. Accordingly, the conveyor rollers 13, 19, 23, 31 are elastically deformable.

The elastomer may be natural rubber or synthetic rubber. Examples of the elastomer include EPDM, EPR, SBR, NBR, isoprene rubber, butadiene rubber, acrylic rubber, chloroprene rubber, silicone rubber, urethane rubber, and fluoro rubber.

The supply roll 47 has the electrode 73 wound around the outer circumference thereof. That is, the supply roll 47 holds the electrode 73 in a wound state. The group of conveyor rollers draws out and conveys the electrode 73 held by the supply roll 47.

The wind-up roll 49 winds up and keeps the power storage device negative electrode 75 conveyed by the group of conveyor rollers. The power storage device negative electrode 75 is fabricated by doping the electrode 73 with lithium in the electrolyte solution tanks 3, 5.

The way of doping with lithium may be intercalation of ionic lithium into the active material, formation of lithium alloy, or consumption of lithium ions by formation of an SEI (Solid Electrolyte Interface) film.

The counter electrode members 51 are accommodated in the electrolyte solution tanks 3, 5 as described above. The counter electrode members 51 have a plate-like shape. The counter electrode members 51 have a structure in which a conductive base material and a lithium containing plate are stacked. Examples of the material for the conductive base material include copper, stainless steel, and nickel. The form of the lithium containing plate is not particularly limited, and examples thereof include a lithium plate and a lithium alloy plate. The lithium containing plate may have a thickness of, for example, 0.03 mm or larger and 3 mm or smaller.

The porous insulating members 53 have a plate-like shape. The porous insulating members 53 are attached to the surfaces of the counter electrode members 51. The plate-like shape of the porous insulating members 53 is a shape when the porous insulating members 53 are attached to the surfaces of the counter electrode members 51. The porous insulating members 53 may be members that self maintain the given shape, or may be members, such as nets, that can be easily deformed.

The porous insulating member 53 and the electrode 73, which is conveyed by the group of conveyor rollers, do not contact with each other. The shortest distance from the surface of the porous insulating member 53 to the electrode 73 is preferably in the range of 0.5 mm or longer and 100 mm or shorter, and particularly preferably in the range of 1 mm or longer and 10 mm or shorter. The shortest distance is a distance between a point on the surface of the porous insulating member 53 that is closest to the electrode 73 and the electrode 73.

The porous insulating members 53 are porous. Accordingly, a dope solution, which will be described later, can pass through the porous insulating members 53. This allows the counter electrode members 51 to contact with the dope solution.

An example of the porous insulating members 53 may be resin mesh. Examples of the resin include polyethylene, polypropylene, nylon, polyether ether ketone, and polytetrafluoroethylene.

The aperture size of the mesh can be appropriately set and may be set to, for example, 0.1 $\mu$m or larger and 10 mm or smaller; however, it is preferably 0.1 mm or larger and 5 mm or smaller. The thickness of the mesh can be suitably set and may be set to, for example, 1 $\mu$m or larger and 10 mm or smaller; however, it is preferably 30 $\mu$m or larger and 1 mm or smaller. The aperture ratio of the mesh can be suitably set and may be set to, for example, 5% or more and 95% or less; however, it is preferably 50% or more and 95% or less.

The porous insulating member 53 may be entirely made of an insulating material, or may partially comprise insulating layers.

The supporting tables 55 support the electrolyte solution tanks 3, 5 and the cleaning tank 7 from below. The height of the supporting tables 55 can be changed. When the supporting tables 55 are lowered while the positions of the partition plate 69, the counter electrode members 51, and the porous insulating members 53 in the up-down directions are maintained, the electrolyte solution tanks 3, 5 can be moved downward relative to the partition plate 69, the counter electrode members 51, and the porous insulating members 53. When the supporting tables 55 are raised, the electrolyte solution tanks 3, 5 can be moved upward relative to the partition plate 69, the counter electrode members 51, and the porous insulating members 53.

The circulation filters 57 are provided to the respective electrolyte solution tanks 3, 5. The circulation filters 57 each comprise a filter 81, a pump 83, and a piping 85.

In the circulation filter 57 provided to the electrolyte solution tank 3, the piping 85 is a circulation piping that extends from the electrolyte solution tank 3, sequentially passes through the pump 83 and the filter 81, and returns to the electrolyte solution tank 3. The dope solution in the electrolyte solution tank 3 circulates in the piping 85 and the filter 81 and returns again to the electrolyte solution tank 3 due to the driving force of the pump 83. At this time, impurities and the like in the dope solution are filtered by the filter 81. The impurities include impurities precipitated from the dope solution, and impurities produced from the electrode 73. In FIG. 1, illustrations of the dope solution and cleaning solution are omitted for convenience.

In the circulation filter 57 provided to the electrolyte solution tank 5, the piping 85 is a circulation piping that extends from the electrolyte solution tank 5, sequentially passes through the pump 83 and the filter 81, and returns to the electrolyte solution tank 5. The dope solution in the electrolyte solution tank 5 circulates in the piping 85 and the filter 81 and returns again to the electrolyte solution tank 5 due to the driving force of the pump 83. The circulation filter 57 provided to the electrolyte solution tank 5 also has the same functions and effects as those of the circulation filter 57 provided to the electrolyte solution tank 3.

Examples of the material for the filter 81 may include resin such as polypropylene and polytetrafluoroethylene. The pore diameter of the filter 81 can be suitably set and may be set to, for example, 30 $\mu$m or larger and 50 $\mu$m or smaller.

The negative terminal of one of the two direct current power sources 61 (hereinafter referred to as one direct current power source 61) is connected to each of the conveyor rollers 15, 21. The positive terminal of the one direct current power source 61 is connected to each of four counter electrode members 51 in total. The four counter electrode members 51 are the counter electrode members 51 in the electrolyte solution tank 3. The electrode 73 contacts the conductive conveyor rollers 15, 21. The electrode 73 and the counter electrode members 51 in the electrolyte solution tank 3 are inside the dope solution, which is the electrolyte solution. Thus, the electrode 73 and the counter electrode members 51 in the electrolyte solution tank 3 are electrically connected.

The negative terminal of the other of the two direct current power sources 61 (hereinafter referred to as the other direct current power source 61) is connected to each of the conveyor rollers 25, 29. The positive terminal of the other direct current power source 61 is connected to each of four counter electrode members 51 in total. The four counter electrode members 51 are the counter electrode members 51 in the electrolyte solution tank 5. The electrode 73 contacts the conductive conveyor rollers 25, 29. The electrode 73 and the counter electrode members 51 in the electrolyte solution tank 5 are inside the dope solution, which is the electrolyte solution. Thus, the electrode 73 and the counter electrode members 51 in the electrolyte solution tank 5 are electrically connected.

The blower 63 blows gas to the power storage device negative electrode 75 coming out of the cleaning tank 7 to vaporize the cleaning solution, and dries the power storage device negative electrode 75. The gas to be used is preferably a gas inert with respect to the active material doped with lithium. Example of such a gas include helium gas, neon gas, argon gas, and dehumidified air from which water has been removed.

(2-2) Configuration of Electrode 73

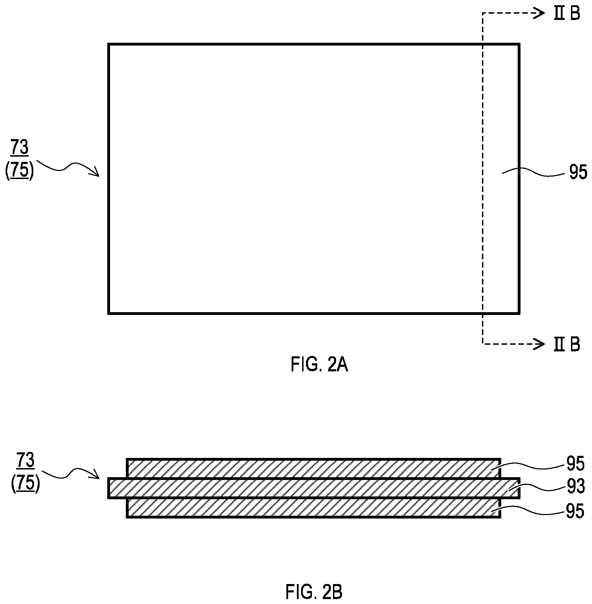

The configuration of the electrode 73 will be described based on FIG. 2A and FIG. 2B. The electrode 73 is a long strip-like member. As shown in FIG. 2B, the electrode 73 comprises a negative electrode current collector 93 and negative electrode active material layers 95. The negative electrode active material layers 95 are formed on both sides of the negative electrode current collector 93. In the electrode 73, the negative electrode active material layers 95 are not yet doped with lithium.

The negative electrode active material layers 95 can be formed by a method in which the negative electrode slurry is applied on the negative electrode current collector 93. The negative electrode active material layers 95 can be formed also by a method in which the negative electrode slurry is formed into a sheet-like shape and the sheet-shaped molded product is adhered to the negative electrode current collector 93.

(2-3) Method of Doping Power Storage Device Negative Electrode

The electrode 73 is wound around the supply roll 47. The dope solution is stored in the electrolyte solution tanks 3, 5. The dope solution contains lithium ions and a solvent. An example of the solvent may be an organic solvent. The organic solvent is preferably an aprotic organic solvent.

Examples of the aprotic organic solvent include ethylene carbonate, propylene carbonate, butylene carbonate, dimethyl carbonate, diethyl carbonate, methyl ethyl carbonate, 1-fluoroethylene carbonate, $\gamma$-butyrolactone, acetonitrile,

dimethoxyethane, tetrahydrofuran, dioxolan, methylene chloride, sulfolane, diethylene glycol dimethyl ether (diglyme), diethylene glycol methyl ethyl ether, triethylene glycol dimethyl ether (triglyme), triethylene glycol butyl methyl ether, tetraethylene glycol dimethyl ether (tetraglyme), and ionic solutions. Examples of the ionic solutions include quaternary imidazolium salt, quaternary pyridinium salt, quaternary pyrrolidinium salt, quaternary piperidinium salt. The above-described organic solvent may consist of a single component, or may be a mixed solvent containing two or more types of components.

The lithium ions contained in the above-described dope solution are ions that make up lithium salt. Examples of an anionic part making up the lithium salt include phosphorous anion including fluoro group such as $PF_6^-$, $PF_3(C_2F_5)_3^-$, and $PF_3(CF_3)_3^-$; boron anion including fluoro group or cyano group such as $BF_4^-$, $BF_2(CF)_2^-$, $BF_3(CF_3)^-$, and $B(CN)4^-$; sulfonyl imide anion including fluoro group such as $N(FSO_2)_2^-$, $N(CF_3SO_2)_2^-$, and $N(C_2F_5SO_2)_2^-$; and organic sulfone acid anion including fluoro groups such as $CF_3SO_3^-$.

The concentration of the lithium salt in the above-described dope solution is preferably 0.1 mol/L or higher, and more preferably 0.5 mol/L or higher and 5 mol/L or lower. If the concentration of the lithium salt in the dope solution is within the above-described ranges, doping with lithium efficiently progresses.

The above-described dope solution may further contain an additive/additives such as vinylene carbonate, vinyl ethylene carbonate, 1-fluoroethylene carbonate, 1-(trifluoromethyl) ethylene carbonate, succinic anhydride, maleic anhydride, propanesultone, and diethyl sulfone.

The cleaning solution is stored in the cleaning tank 7. The cleaning solution preferably contains, for example, an aprotic solvent. An example of the aprotic solvent may be at least one type selected from carbonate-based solvent, ester-based solvent, ether-based solvent, hydrocarbon-based solvent, keton-based solvent, nitrile-based solvent, sulfur-containing solvent, and amide-based solvent.

The cleaning solution may substantially consist of the aprotic solvent, or may contain other component(s) in addition to the aprotic solvent. The boiling point of the aprotic solvent is preferably 30°C or higher and 200°C or lower, more preferably 40°C or higher and 150°C or lower, and further more preferably 50°C or higher and 120°C or lower. The boiling point of 30°C or higher can inhibit excessive evaporation of the cleaning solution in the cleaning tank 7. The boiling point of 200°C or lower facilitates removal of the cleaning solution from a cleaned power storage device negative electrode 75.

It is preferable that the composition of the dope solution stored in the electrolyte solution tank 3 and the composition of the dope solution stored in the electrolyte solution tank 5 are different. In this case, the power storage device negative electrode 75 with a higher quality can be efficiently fabricated.

An example of the state in which the compositions of the dope solutions in the electrolyte solution tanks 3, 5 vary may be a state in which the concentration of the SEI film forming component in the dope solution stored in the electrolyte solution tank 3 is higher than the concentration of the SEI film forming component in the dope solution stored in the electrolyte solution tank 5.

Subsequently, the electrode 73 is drawn out from the supply roll 47 and conveyed along the above-described path by the group of conveyor rollers. When the electrode 73 passes through the electrolyte solution tanks 3, 5, the active material contained in each negative electrode active material layer 95 is doped with lithium.

The process of the doping with lithium described above corresponds to the doping processes. It is preferable that a current density in the first doping process performed in the electrolyte solution tank 3 and a current density in the second doping process performed in the electrolyte solution tank 5 are different. In this case, the power storage device negative electrode 75 with a higher quality can be efficiently fabricated.

An example of the state in which the current densities are different in the first doping process and the second doping process may be a state in which the current density in the first doping process is higher or lower than the current density in the second doping process. The current density in the first doping process and the current density in the second doping process being different corresponds to the conditions for doping the active material with lithium being different between in the first doping process and in the second doping process.

If the counter electrode members 51 stored in the electrolyte solution tanks 3, 5 each comprise the conductive base material and the lithium containing plate disposed on the conductive base material, the mass of lithium that is contained in the lithium containing plate stored in the electrolyte solution tank 3 and the mass of lithium that is contained in the lithium containing plate stored in the electrolyte solution tank 5 may be different.

An example of the state in which the masses of lithium that are contained in the lithium containing plates stored in the electrolyte solution tanks 3, 5 may be a state in which the mass of lithium that is contained in the lithium containing plate stored in the electrolyte solution tank 3 is larger or smaller than the mass of lithium that is contained in the lithium containing plate stored in the electrolyte solution tank 5. The mass of lithium that is contained in the lithium containing plate stored in the electrolyte solution tank 3 and the mass of lithium that is contained in the lithium containing plate stored in the electrolyte solution tank 5 being different corresponds to the conditions for doping the negative electrode active material with lithium being different between in the first doping process and in the second doping process.

Doping of the negative electrode active material with lithium makes the electrode 73 into the power storage device negative electrode 75. While being conveyed by the group of conveyor rollers, the power storage device negative electrode 75 is cleaned in the cleaning tank 7. Finally, the power storage device negative electrode 75 is wound up by the wind-up roll 49. The power storage device negative electrode 75 has the same configuration as that of the electrode 73 except that the negative electrode active material is doped with lithium.

The electrode manufacturing apparatus 1 is particularly suitable for manufacturing power storage device negative electrodes of lithium ion capacitors or lithium ion rechargeable batteries.

The ratio of doping the negative electrode active material layer with lithium is preferably 5% or more and 95% or less of the discharge capacity C2 of the negative electrode. In this case, both the capacity of the negative electrode and the cycle durability are improved. The discharge capacity C2 of the negative electrode is the discharge capacity of the negative electrode when the negative electrode is charged and discharged between 0V vs. Li/Li+ and 3V vs. Li/Li+.

3. Method of Manufacturing Battery

The method of manufacturing the battery according to the present disclosure is a method of manufacturing the battery comprising the positive electrode, the negative electrode, and electrolyte; the method includes the processes for manufacturing the power storage device negative electrode in accordance with "2. Method of Manufacturing Power Storage Device Negative Electrode" described above.

The basic structure of the positive electrode, which forms the battery, may be the general structure. For the positive electrode active material, an organic active material, such as nitroxyl radical compound, and oxygen may be used other than those that have been already exemplified.

The form of the electrolyte, which forms the battery, is a liquid electrolyte solution in general. The basic composition of the electrolyte solution is the same as the above-described dope solution. The concentration of the lithium ions and the concentration of the lithium salt in the electrolyte are preferably 0.1 mol/L or higher, and more preferably 0.5 mol/L or higher and 5.0 mol/L or loaer. The electrolyte may have a gel-like or solid-like form in order to inhibit liquid leakage.

The battery may comprise a separator between the positive electrode and the negative electrode to inhibit a physical contact of the positive electrode and the negative electrode. Examples of the separator include a nonwoven fabric or a porous film made of raw material such as cellulose/rayon, polyethylene, polypropylene, polyamide, polyester, and polyimide.

An example of the structure of the battery may be that of a stacked-type cell in which three or more of a plate-shaped constituent unit, which includes the positive electrode, the negative electrode, and the separator interposed therebetween, are stacked to form a laminate, and the laminate is sealed in an outer film. The laminate corresponds to the electrode assembly.

The battery can be manufactured by, for example, forming a basic structure that includes at least the negative electrode and the positive electrode and injecting the electrolyte into the basic structure.

4. Method of Manufacturing Capacitor

The method of manufacturing the capacitor according to the present disclosure is a method of manufacturing the capacitor comprising the positive electrode, the negative electrode, and the electrolyte; the method includes the processes of manufacturing the power storage device negative electrode in accordance with "2. Method of Manufacturing Power Storage Device Negative Electrode" described above.

The basic structure of the positive electrode, which forms the capacitor, may be the general structure. For the positive electrode active material, it is preferable to use activated carbon.

The form of the electrolyte, which forms the capacitor, is a liquid electrolyte solution in general. The basic composition of the electrolyte solution is the same as the composition of the above-described dope solution. The concentration of the lithium ions and the concentration of the lithium salt in the electrolyte are preferably 0.1 mol/L or higher, and more preferably 0.5 mol/L or higher and 5.0 mol/L or lower. The electrolyte may have a gel-like or solid-like form in order to inhibit liquid leakage.

The capacitor may comprise a separator between the positive electrode and the negative electrode to inhibit a physical contact of the positive electrode and the negative electrode. Examples of the separator include a nonwoven fabric or a porous film made of raw material such as cellulose rayon, polyethylene, polypropylene, polyamide, polyester, and polyimide.

An example structure of the capacitor may be that of a stacked-type cell in which three or more of plate-shaped constituent unit, which includes the positive electrode, the negative electrode, and the separator interposed therebetween, are stacked to form a laminate, and the laminate is sealed in an outer film.

An example of the structure of the capacitor may be that of a wound-type cell in which a band-shaped constituent unit, which includes the positive electrode, the negative electrode, and the separator interposed therebetween, is wound to form a laminate, and the laminate is accommodated in a rectangular or cylindrical container.

The capacitor can be manufactured by, for example, forming a basic structure, which includes at least the negative electrode and the positive electrode, and injecting the electrolyte into the basic structure.

In a case of the lithium ion capacitor, the density of the negative electrode active material layer thereof is preferably 0.50 g/cm$^3$ or higher and 1.50 g/cm$^3$ or lower, and particularly preferably 0.70 g/cm$^3$ or higher and 1.20 g/cm$^3$ or lower.

5. Examples 1 to 6 and Comparative Examples 1 to 3

(5-1) Manufacturing of Power Storage Device Negative Electrode of Example 1

With a planetary mixer, a composition consisting of 31 part by mass of SiO, 62 part by mass of artificial graphite, 4 part by mass of acetylene black powder, 2 part by mass of SBR binder, 1 part by mass of carboxymethyl cellulose, and 85 part by mass of deionized water was thoroughly mixed to obtain the negative electrode slurry. The acetylene black corresponds to conductive agent.

A long strip-like negative electrode current collector was prepared. The dimensions of the negative electrode current collector were 150 mm in width, 500 m in length, and 8 $\mu$m in thickness. The surface roughness Ra of the negative electrode current collector was 0.1 $\mu$m. The negative electrode current collector was made of a copper foil.

As shown in FIG. 2B, the negative electrode slurry was coated on both sides of the negative electrode current collector 93 using a comma coater to thereby form the negative electrode active material layers 95, which was then vacuum-dried for 12 hours at 120 °C. Obtained was the electrode 73, which was made into the negative electrode. Then, the electrode was pressed using a roll-press machine to obtain the power storage device negative electrode 75. The negative electrode active material layers 95, which were formed on the both sides of the negative electrode, had a coating weight of 130 g/m$^2$ in total. The negative electrode active material layers 95, which were formed on the both sides of the negative electrode had a thickness of 87 $\mu$m in total. The negative electrode active material layers 95 were formed along the longitudinal direction of the negative electrode current collector 93. The negative electrode active material layers 95 were formed in the center portion of the negative electrode current collector 93 in the width direction to extend 120 mm in width. Negative electrode active material layer unformed portions at both ends of the negative electrode current collector 93 in the width direction were each 15 mm. The negative electrode active material layer unformed portions are portions in which the negative electrode active material layers 95 are not formed.

(Measurement of Charge Capacity, Discharge Capacity, and Irreversible Capacity of Negative Electrode Per Unit Area)

A measurement sample, which had the dimensions of 1.5 cm $\times$ 2.0 cm (3.0 cm$^2$ in area), was cut out from the obtained electrode 73. For the counter electrode of this sample, metal lithium, which had longitudinal and lateral dimensions of 1.5 cm $\times$ 2.0 cm (3.0 cm$^2$ in area) and a thickness of 200 $\mu$m, was prepared. For the separator, a polyethylene nonwoven fabric, which had a thickness of 50 $\mu$m, was prepared. A coin-type cell for evaluation of the negative electrode was prepared. The coin-type cell for evaluation of the negative electrode had a configuration in which the counter electrode was disposed on each side of the sample with the separator interposed therebetween, a metal lithium plate was included for a reference electrode, and, for the electrolyte solution, a mixed solution, which contained 1.4 M of LiPF6, and ethylene carbonate, 1-fluoro ethyl carbonate, and ethyl methyl carbonate at a volume ratio of 1:2:7, was used.

The obtained coin-type cell was charged at a constant charge current of 4 mA until the voltage became 0V, and was thereafter charged at a constant voltage of 0 V until the charge current was reduced to 0.4 mA. The obtained charge capacity was divided by the area of the measurement sample, to thereby obtain the charge capacity per unit area. Then, the coin-type cell was discharged at a constant discharge current of 4 mA until the cell voltage became 3.0V, and the obtained discharge capacity was divided by the area of the measurement sample, to thereby obtain the discharge capacity per unit area. The obtained discharge capacity per unit area is the same in numerical value as the discharge capacity per unit area calculated in obtaining the discharge capacity C2 of the negative electrode, which will be described later. The difference between the charge capacity per unit area and the discharge capacity per unit area is calculated as the irreversible capacity. The results are shown in Table 1.

Subsequently, the counter electrode member was fabricated as follows. First, a long copper plate with a thickness of 2 mm was prepared. On the copper plate, a lithium metal plate was adhered. The dimensions of the lithium metal plate were 120 mm in width, 800 mm in length, and 1 mm in thickness. The lithium metal plate was adhered along the longitudinal direction of the copper plate. The copper plate, to which the lithium metal plate was adhered in this way, formed the counter electrode member 51. Eight pieces of identical counter electrode members 51 were fabricated.

The electrode manufacturing apparatus 1 shown in FIG. 1 was prepared, and the electrode 73 and the counter electrode members 51 were installed. Then, the electrolyte solution was supplied into the electrode manufacturing apparatus 1. The electrolyte solution contained 1.4 M of LiPF$_6$. The solvent of the electrolyte solution was a mixed solvent containing ethylene carbonate, 1-fluoroethylene carbonate, and ethyl methyl carbonate at a volume ratio of 1:2:7.

Subsequently, the electrode 73 and the counter electrode members 51, which were installed in the electrode manufacturing apparatus 1, were connected to the direct current power sources with current voltage monitors, and while the electrode 73 was conveyed at a speed of 0.1 m/min, a 5A current was applied. The energization time was set to a time within which the ratio of doping with lithium per unit area became 26% of the discharge capacity per unit area, which is obtained above.

By this process, the negative electrode active material in the negative electrode active material layer 95 was doped with lithium and thereby the electrode 73 was made into the power storage device negative electrode 75. In the present example, Examples 2 to 4, and Comparative Examples 1 to 2 described later, the power storage device negative electrode is the negative electrode for the lithium ion rechargeable battery.

After being led through the cleaning tank 7, the power storage device negative electrode 75 was wound up. The cleaning tank 7 contained DMC (dimethyl carbonate) at 25°C. Through the above processes, the power storage device negative electrode 75 was fabricated.

Regarding the power storage device negative electrode 75 of Example 1, Table 1 shows the aperture ratio of the negative electrode current collector; the thickness of the negative electrode current collector; the coating weight of the negative electrode active material layer; the thickness of the negative electrode active material layer; the charge capacity, discharge capacity, and irreversible capacity of the negative electrode per unit area; and the ratio of doping the negative electrode active material layer with lithium. Table 1 also shows numerical values of the above items according to Examples 2 to 4 and Comparative Examples 1 to 2, which will be described later.

[Table 1]

| | Aperture Ratio of Negative Electrode Current Collector (%) | Thickness of Negative Electrode Current Collector (μm) | Coating Weight of Negative Electrode Active Material Layer (g/m²) | Thickness of Negative Electrode Active Material Layer (μm) | Per Area of Negative Electrode | | | Doping Ratio of Lithium (%) |
|---|---|---|---|---|---|---|---|---|
| | | | | | Charge Capacity (mAh/cm²) | Discharge Capacity (mAh/cm²) | Irreversible Capacity (mAh/cm²) | |
| Example 1 | 0 | 8 | 130 | 87 | 11.6 | 9.5 | 2.1 | 26 |
| Example 2 | 0 | 8 | 236 | 157 | 21.0 | 17.2 | 3.7 | 69 |
| Example 3 | 0 | 8 | 236 | 157 | 21.0 | 17.2 | 3.7 | 45 |
| Example 4 | 0 | 8 | 236 | 157 | 21.0 | 17.2 | 3.7 | 20 |
| Example 5 | 0 | 8 | 590 | 392 | 52.5 | 43.1 | 9.4 | 69 |
| Example 6 | 0 | 8 | 4 | 2.7 | 0.4 | 0.3 | 0.1 | 69 |
| Comparative Example 1 | 0 | 8 | 102 | 68 | 9.1 | 7.5 | 1.6 | 0 |
| Comparative Example 2 | 0 | 8 | 106 | 71 | 9.5 | 7.8 | 1.7 | 11 |
| Comparative Example 3 | 0 | 8 | 236 | 157 | 21.0 | 17.2 | 3.7 | 0 |

(5-2) Fabrication of Power Storage Device Negative Electrodes of Examples 2 to 6 and Comparative Examples 1 to 3

A power storage device negative electrode was fabricated and evaluated in the same manner as in Example 1, except that the coating weight of the negative electrode active material layer, the thickness of the negative electrode active material layer, and the ratio of doping the negative electrode active material layer with lithium were set to numerical values shown in Table 1.

(5-3) Evaluation of Power Storage Device Negative Electrode

The evaluation was made under a circumstance where the power storage device negative electrode of Example 1 was used as the negative electrode of the lithium ion rechargeable battery. Specifically, the discharge capacity C1 of the cell, the discharge capacity C2 of the negative electrode, the discharge capacity ratio X, the discharge capacity C3 of the negative electrode, the discharge capacity ratio Y, the weight energy density, and the after 200-cycle capacity retention rate (%) were measured. The results of measurement are shown in Table 2.

[Table 2]

| | Coating Weight of Positive Electrode Active Material Layer (g/m$^2$) | Discharge Capacity C1 of Cell (Ah) | Discharge Capacity C2 of Negative Electrode (Ah) | Discharge Capacity Ratio X | Discharge Capacity C3 of Negative Electrode (Ah) | Discharge Capacity Ratio Y | Weight Energy Density (Wh/kg) | After 200-cycle Capacity Retention Rate (%) |
|---|---|---|---|---|---|---|---|---|
| Example 1 | 440 | 28.1 | 35.5 | 0.79 | 35.3 | 0.99 | 308 | 46 |
| Example 2 | 440 | 28.2 | 64.5 | 0.44 | 64.1 | 0.99 | 277 | 99 |
| Example 3 | 440 | 28.7 | 64.5 | 0.44 | 48.7 | 0.76 | 277 | 99 |
| Example 4 | 440 | 26.7 | 64.5 | 0.41 | 33.9 | 0.53 | 262 | 72 |
| Example 5 | 1100 | 69.0 | 161.2 | 0.43 | 158.2 | 0.98 | 310 | 64 |
| Example 6 | 7 | 0.4 | 1.0 | 0.44 | 1.0 | 1.00 | 17 | 99 |
| Comparative Example 1 | 440 | 24.5 | 28.0 | 0.88 | 28.0 | 1.00 | 278 | 32 |
| Comparative Example 2 | 440 | 27.0 | 29.2 | 0.93 | 29.2 | 1.00 | 304 | 14 |
| Comparative Example 3 | 440 | 23.8 | 64.5 | 0.37 | 25.5 | 0.40 | 226 | 18 |

A method of measuring the initial capacity and the after 200-cycle capacity retention rate is as follows.

(5-4) Fabrication of Cell for Evaluation

With a planetary mixer, a composition consisting of 93 part by mass of nickel-manganese-lithium cobalt oxide, 3 part by mass of acetylene black powder, 4 part by mass of polyvinylidene difluoride binder, and 62 part by mass of N-methyl pyrrolidone was thoroughly mixed to obtain the positive electrode slurry.

A long strip-like positive electrode current collector was prepared. The dimensions of the positive electrode current collector were 150 mm in width, 500 m in length, and 15 $\mu$m in thickness. The positive electrode current collector was made of an aluminum foil.

The positive electrode slurry was coated on both sides of the positive electrode current collector using the comma coater to thereby form the positive electrode active material layers, which then underwent vacuum-drying for 12 hours at 120 °C. Then, the electrode was pressed using the roll-press machine to obtain the positive electrode. The positive electrode active material layers, which were formed on both sides of the positive electrode, had a coating weight of 440 g/m$^2$ in total and a thickness of 163 $\mu$m in total. The positive electrode active material layers were formed along the longitudinal direction of the positive electrode current collector. The positive electrode active material layers were formed in the center portion of the positive electrode current collector in the width direction to extend to 120 mm in width. Positive electrode active material layer unformed portions at both ends of the positive electrode current collector in the width direction were each 15 mm. The positive electrode active material layer unformed portions are portions in which the positive electrode active material layers are not formed.

Thirty pieces of negative electrodes in a dimension of 10.0 cm × 12.9 cm (excluding terminal welded portions) were cut out from the power storage device negative electrode obtained in the above-described (5-1). In addition, twenty-nine pieces of positive electrodes in a dimension of 9.7 cm × 12.6 cm (excluding terminal welded portions) were cut out from the positive electrode obtained above. The positive electrode current collector is made of an aluminum foil.

The positive electrodes and the negative electrodes were alternately stacked with separators, which were made of a polyethylene nonwoven fabric having a thickness of 16 $\mu$m, interposed therebetween to make an electrode assembly that includes a laminate. At this time, the positive electrodes and the negative electrodes were stacked in the order of: separator, negative electrode, separator, and positive electrode, with respective coating portions overlapped with each other, but the terminal welded portions of the positive electrode current collectors and the terminal welded portions of the negative electrode current collectors positioned on opposite sides. The four sides of the laminate were fixed with tape. Accordingly, the electrode assembly was fabricated. Furthermore, the negative electrodes were placed in the outermost of the electrode assembly.

Each of the twenty-eight positive electrodes of the fabricated electrode assembly had a power source tab for the positive electrode overlapped with and welded to its terminal welded portion. The power source tab for the positive electrode was heat-welded with a sealant film in its seal portion in advance and was made of aluminum into a rectangular shape. In contrast, each of the twenty-nine negative electrodes of the electrode assembly had a power source tab for the negative electrode overlapped with and welded to its terminal welded portion. The power source tab for the negative electrode was heat-welded with a sealant film in its seal portion in advance and was made of nickel into a rectangular shape. Accordingly, a cell for evaluation was fabricated.

For a laminate film for accommodating the electrode assembly therein, a first laminate film and a second laminate film were prepared. The first laminate film and the second laminate film each were drawn to a size that allows the cell element for evaluation to be accommodated in the center portion. The first laminate film and the second laminate film each had a configuration in which a polypropylene layer, an aluminum layer, and a nylon layer were stacked. Then, the electrode assembly was placed in the center portion of the second laminate film such that the positive electrode tab and the negative electrode tab each protrude out of the second laminate film. The electrode assembly was overlapped with the second laminate film in a manner to sandwiched by the second laminate film. Then, respective three sides of the first laminate film and the second laminate film (including two sides where the positive electrode terminal and the negative electrode terminal protrude) were fusion-bonded. Consequently, a laminate film bag, which opens at only one side thereof, was formed. The electrode assembly was accommodated in the laminate film bag.

Subsequently, the inside of the laminate film bag was vacuum-impregnated with the electrolyte solution. The electrolyte solution was a mixed solution that contained 1.4M of LiPF6, and ethylene carbonate, 1-fluoroethyl carbonate, and ethyl methyl carbonate at a volume ratio of 1:2:7. Then, the remaining one side of the laminate film bag that had been opened was fusion-bonded. Through the above processes, the cell for evaluation was completed.

(5-5) Fabrication of Cell for Evaluation of Examples 2 to 6 and Comparative Examples 1 to 3

A cell for evaluation was fabricated and evaluation was made in the same manner as in Example 1, except that the negative electrode obtained in the above-described (5-2) was used for the negative electrode of each Example and the coating weight of the positive electrode active material layer was set to numerical values shown in Table 2.

(5-6) Evaluation Using Cell for Evaluation

(Initial Evaluation)

The cell made for evaluation was charged at a constant current of 2.5 A until the cell voltage became 4.3 V, and was thereafter charged at a constant voltage of 4.3 V until the current was reduced to 0.25 A (constant current-constant voltage mode). Then, the cell for evaluation was discharged at a constant current of 2.5 A until the cell voltage became 2.0 V. The above-described charge and discharge were repeated twice and the discharge capacity at the second discharge was measured. This measured value was defined as the initial discharge capacity C1.

Furthermore, the weight energy density (Wh/kg) of the cell was calculated using the initial discharge capacity, the cell weight, and the average voltage during discharging based on Formula (5) below. The results are shown in Table 2.

$$\text{Formula (5): weight energy density (Wh/kg)} = (\text{initial discharge}$$
$$\text{capacity} \times \text{average cell voltage during discharging})/ \text{cell weight}$$

(Calculation of C2 and C3)

The cell made for evaluation was charged at a constant current of 2.5 A until the cell voltage became 4.3 V. The charged cell for evaluation was disassembled to remove the negative electrode. Then, in a glovebox where the atmosphere was replaced with argon, the negative electrode was immersed in a container containing dehydrated ethyl methyl carbonate and was cleaned at 25 °C for ten minutes while being stirred using a stirrer. After the cleaning was repeated three times, the negative electrode was dried at 25 °C for one hour.

From the negative electrode that underwent drying, the measurement sample in a dimension of 1.5 cm $\times$ 2.0 cm (3.0 cm$^2$ in area), was cut out. For the counter electrode of this sample, the metal lithium, which had longitudinal and lateral dimensions of 1.5 cm $\times$ 2.0 cm (3.0cm$^2$ in area) and a thickness of 200 $\mu$m, was prepared. For the separator, the polyethylene nonwoven fabric, which had a thickness of 50 $\mu$m, was prepared. The coin-type cell for evaluation of the negative electrode was prepared. The coin-type cell for evaluation of the negative electrode had a configuration in which the counter electrode was disposed on each side of the sample with the separator interposed therebetween, the metal lithium plate was included for the reference electrode, and, for the electrolyte solution, the mixed solution, which contained 1.4 M of LiPF$_6$, and ethylene carbonate, 1-fluoroethyl carbonate, and ethyl methyl carbonate at a volume ratio of 1:2:7, was used.

The obtained coin-type cell was discharged at a constant discharge current of 4 mA until the cell voltage became 3.0 V. The obtained discharge capacity was divided by the area of the measurement sample, to thereby obtain the discharge capacity per unit area.

The discharge capacity C3 of the negative electrode was calculated based on Formula (5) below.

$$\text{Formula (5): C3} = \text{discharge capacity per unit area} \times \text{area of}$$
$$\text{negative electrode in cell}$$

Subsequently, the coin-type cell was charged at a constant charge current of 4 mA until the voltage became 0 V, and was thereafter charged at a constant voltage of 0 V until the constant charge current was reduced to 0.4 mA. And, the coin-type cell was discharged at a constant discharge current of 4 mA until the cell voltage became 3.0 V. The obtained discharge capacity was divided by the area of the measurement sample, to thereby obtain the discharge capacity per unit area. The discharge capacity C2 of the negative electrode was calculated based on Formula (6) below.

$$\text{Formula (6): C2} = \text{discharge capacity per unit area} \times \text{area of}$$
$$\text{negative electrode in cell}$$

The discharge capacity ratio Y, which is defined by Formula (2) below, was calculated.

$$\text{Formula (2) } Y = C3/C2$$

(After 200-cycle Capacity Retention Rate)

Subsequently, the cell for evaluation was charged at a constant current of 25 A until the voltage became 4.3 V. Then, the cell for evaluation was discharged at a constant current of 25 A until the cell voltage became 2.0 V. The above-described cycle was repeated 200 cycles.

Subsequently, the cell for evaluation was charged at a constant current of 2.5 A until the cell voltage became 4.3 V, and was thereafter charged at a constant voltage of 4.3 V was applied until the charge current was reduced to 0.25 A. Then, the cell for evaluation was discharged at a constant current of 2.5 A until the cell voltage became 2.0 V. The above-described charge and discharge were repeated twice and the discharge capacity at the second discharge was measured. This measured value was defined as the discharge capacity after 200 cycles. The after 200-cycle capacity retention rate (%) was calculated based on Formula (7) below.

$$\text{Formula (7): after 200-cycle capacity retention rate (\%) =}$$

$$\text{(discharge capacity after 200 cycles/ initial discharge capacity)} \times 100$$

The cell for evaluation of each Example had a high initial discharge capacity of the cell, a high weight energy density, and a high after 200-cycle capacity retention rate. Furthermore, the cells for evaluation according to Examples 2, 3, and 6 had, in particular, high after 200-cycle capacity retention rates. The cells for evaluation according to Examples 1 and 5 showed, in particular, high weight energy densities. The power storage device negative electrodes of Comparative Examples 1 to 3 had low initial discharge capacities of the cell, low weight energy densities, and low after 200-cycle capacity retention rates.

6. Examples 7 to 11 and Comparative Examples 4 to 6

(6-1) Fabrication of Power Storage Device for Negative Electrode of Example 7

A long strip-like negative electrode current collector was prepared. The dimensions of the negative electrode current collector were 150 mm in width, 100 m in length, and 8 $\mu$m in thickness. The surface roughness Ra of the negative electrode current collector was 0.1 $\mu$m. The negative electrode current collector was made of a copper foil. As shown in FIG. 2B, the negative electrode active material layers 95 were formed on both sides of the negative electrode current collector 93 to obtain the electrode 73. The negative electrode active material layers 95 had a thickness of 80 $\mu$m. The negative electrode active material layers 95 were formed along the longitudinal direction of the negative electrode current collector 93. The negative electrode active material layers 95 were formed in the center portion of the negative electrode current collector 93 in the width direction to extend 120 mm in width. Negative electrode active material layer unformed portions at both ends of the negative electrode current collector 93 in the width direction were each 15 mm. The negative electrode active material layer unformed portions are portions in which the negative electrode active material layers 95 are not formed.

The negative electrode active material layers 95 each contain graphite, carboxymethyl cellulose, acetylene black, a binder, and a dispersant at a mass ratio of 88:3:5:3:1. Graphite, which corresponds to the carbon-based material, corresponds to the negative electrode active material. Acetylene black corresponds to the conductive agent.

Subsequently, a lithium electrode was fabricated as follows. First, a long copper plate, which had a thickness of 2 mm, was prepared. On the copper plate, a lithium metal plate was adhered. The lithium metal plate was 120 mm in width, 800 mm in length, and 1 mm in thickness. The lithium metal plate was adhered along the longitudinal direction of the copper plate. The copper plate, to which the lithium metal plate was adhered in this way, formed the counter electrode member 51. Eight pieces of identical counter electrode members 51 were fabricated.

The electrode manufacturing apparatus 1 shown in FIG. 1 was prepared, and the electrode 73 and the counter electrode member 51 were installed. Then, the electrolyte solution was supplied into the electrode manufacturing apparatus 1. The electrolyte solution contained 1.2 M of LiPF$_6$. The solvent of the electrolyte solution was a mixed solvent containing ethylene carbonate, ethyl methyl carbonate, and dimethyl carbonate at a volume ratio of 3:4:3.

Subsequently, the electrode 73 and the counter electrode member 51, which were installed in the electrode manufacturing apparatus 1, were connected to the direct current power sources with current voltage monitors, and while the electrode 73 was conveyed at a speed of 0.16 m/min, a 40A current was applied. The energization time was set, in view of the irreversible capacity, to a time within which the ratio of doping the negative electrode active material layer with lithium became 70% of the discharge capacity C2 of the negative electrode. The irreversible capacity was estimated in advance by measuring the discharge capacity of the negative electrode after doping with lithium. Through these processes, the negative electrode active material in the negative electrode active material layer 95 was doped with lithium and thereby the electrode 73 was made into the power storage device negative electrode 75. In the present example, and Examples 6 to 9 and Comparative Examples 3 to 5 described later, the power storage device negative electrode is the negative electrode for the lithium ion capacitor.

After being let through the cleaning tank 7, which stored DMC (dimethyl carbonate) at 25 °C, the power storage device negative electrode 75 was wound up. The power storage device negative electrode 75 was fabricated as described above.

(6-2) Fabrication of Power Storage Device Positive Electrode of Example 7

A long strip-like positive electrode current collector was prepared. The dimensions of the positive electrode current collector were 150 mm in width, 100 m in length, and 8 $\mu$m in thickness. The positive electrode current collector was made of an aluminum foil. The thickness of the positive electrode current collector was 12 $\mu$m. The aperture ratio of the positive electrode current collector was 0%.

Positive electrode primer layers were formed on both sides of the positive electrode current collector. On the positive electrode primer layers, positive electrode active material layers were further formed. The positive electrode active material layers had a thickness of 144 $\mu$m. The positive electrode active material layers were formed along the longitudinal direction of the negative electrode current collector 93. The positive electrode active material layers each contained activated carbon, acetylene black, a binder, and a dispersant at a mass ratio of 88:5:3:3. Through the above-described processes, the power storage device positive electrode was obtained.

Regarding the power storage device negative electrode 75 of Example 7, Table 1 shows the aperture ratio of the negative electrode current collector; the thickness of the negative electrode current collector; the discharge capacity C2 of the negative electrode; the discharge capacity C1 of the positive electrode; the discharge capacity ratio X; the ratio of doping the negative electrode active material layer with lithium; and the coating weight of the negative electrode active material. The numerical values of the above items according to Examples 6 to 9 and Comparative Examples 3 to 5, which will be described later, are also shown in Table 3. The evaluation methods are as follows.

[Table 3]

| | Aperture Ratio of Negative Electrode Current Collector (%) | Thickness of Negative Electrode Current Collector (μm) | Negative Electrode Active Material | Discharge Capacity of Negative Electrode (mAh/g) | Discharge Capacity of Positive Electrode (mAh/g) | Discharge Capacity Ratio X | Doping Ratio of Lithium (%) | Thickness of Negative Electrode Active Material Layer (μm) | Coating Weight of Negative Electrode Active Material Layer (g/m²) |
|---|---|---|---|---|---|---|---|---|---|
| | | | | Per Unit Amount of Negative Electrode Active Material | | | | | |
| Example 7 | 0 | 8 | Graphite | 365 | 43 | 0.12 | 70 | 143 | 104 |
| Example 8 | 0 | 8 | Graphite | 365 | 43 | 0.12 | 40 | 143 | 104 |
| Example 9 | 0 | 8 | SiOC | 500 | 43 | 0.09 | 70 | 113 | 76 |
| Example 10 | 0 | 8 | SiO | 1500 | 43 | 0.03 | 70 | 38 | 25 |
| Example 11 | 0 | 8 | Si/ Graphite | 2000 | 43 | 0.02 | 70 | 28 | 19 |
| Comparative Example 4 | 0 | 8 | Graphite | 365 | 84 | 0.23 | 70 | 76 | 51 |
| Comparative Example 5 | 50 | 8 | Graphite | 365 | 84 | 0.23 | 70 | 76 | 51 |
| Comparative Example 6 | 50 | 10 | Graphite | 365 | 84 | 0.23 | 70 | 76 | 51 |

EP 3 783 716 A1

(Measurement of Discharge Capacity C2 of Negative Electrode)

The discharge capacity C2 of the negative electrode is a discharge capacity of the negative electrode when the negative electrode is charged and discharged between 0V vs. Li/Li+ and 3V vs. Li/Li+. Specifically, the discharge capacity C2 of the negative electrode was measured as follows. A sample for measuring the discharge capacity, in a dimension of 16 mm in diameter, was cut out from the power storage device negative electrode obtained in the above-described (6-1). For the counter electrode of this sample, metal lithium, which had longitudinal and lateral dimensions of 16 mm and a thickness of 200 μm, was prepared. For the separator, a polyethylene nonwoven fabric, which had a thickness of 50 μm, was prepared. A coin-type cell was fabricated. The coin-type cell had a configuration in which the counter electrode was disposed on each side of the sample with the separator interposed therebetween, a metal lithium was included for the reference electrode, and, for the electrolyte solution, a mixed solution, which contained 1.4 M of LiPF6, and ethylene carbonate, 1-fluoroethyl carbonate, and ethyl methyl carbonate at a volume ratio of 1:2:7, was used.

The obtained coin-type cell was charged at a constant charge current of 4 mA until the voltage became 0 V, and was thereafter charged at a constant voltage of 0 V until the charge current was reduced to 0.4 mA. Then, the obtained coin-type cell was discharged at a discharge current of 4 mA until the cell voltage became 3.0 V. The obtained discharge capacity was divided by the amount of the negative electrode active material, to thereby obtain the discharge capacity C2 per unit amount of the negative electrode active material.

The discharge capacity C1 of the positive electrode is a discharge capacity of the positive electrode when the positive electrode is charged and discharged at a cell voltage between 2.2 V and 3.8 V. Specifically, the discharge capacity C1 of the positive electrode was measured as follows. A sample for measuring the discharge capacity, in a dimension of 15 mm in diameter, was cut out form the power storage device positive electrode obtained in the above-described (6-2). Furthermore, a sample for measuring the discharge capacity, in a dimension of 16 mm in diameter, was cut out from the power storage device negative electrode obtained in the above-described (6-1). And, the positive electrode and the counter electrode were disposed with the separator interposed therebetween. For the separator, a polyethylene nonwoven fabric, which had a thickness of 50 μm, was used. Then, the coin-type cell was prepared. The coin-type cell had a configuration in which, for the electrolyte solution, the mixed solution containing 1.2 M of LiPF6, and ethylene carbonate, 1-fluoroethyl carbonate, and ethyl methyl carbonate s 3:4:3, was used.

The obtained coin-type cell was charged at a constant current of 4 mA until the cell voltage became 3.8V, and was thereafter charged at a constant voltage of 0 V until the charge current was reduced to 0.4 mA. Then, the obtained coin-type cell was discharged at a constant current of 4 mA until the cell voltage became 2.2 V. The above charge and discharge were repeated twice and the discharge capacity at the second discharge was measured. The measured value was divided by the amount of the negative electrode active material to obtain the discharge capacity C1 of the positive electrode per unit amount of the negative electrode active material.

The discharge capacity ratio X is a value defined by Formula (3) below. Here, the unit of C1 and C2 is expressed in mAh/g.

$$\text{Formula (3): } X = C1/C2$$

The ratio (%) of doping the negative electrode active material layer with lithium is a ratio of the doping amount of lithium into the negative electrode active material layer relative to the discharge capacity C2 of the negative electrode. The unit of doing amount of lithium is expressed in mAh/g.

(6-3) Fabrication of Power Storage Device Negative Electrode of Example 8

A power storage device negative electrode of Example 8 was fabricated basically in the same manner as in Example 7. However, Example 8 is different from Example 7 in that the ratio of doping the negative electrode active material layer with lithium is 40%.

(6-4) Fabrication Power Storage Device Negative Electrodes of Examples 9 to 11

Power storage device negative electrodes of Examples 9 to 11 were fabricated basically in the same manner as in Example 7. However, Examples 9 to 11 are different from Example 7 in respect of the type of the negative electrode active material, the discharge capacity C2 of the negative electrode, the discharge capacity ratio X, and the coating weight of the negative electrode active material.

(6-5) Fabrication of Power Storage Device Negative Electrode of Comparative Example 4

A power storage device negative electrode of Comparative Example 3 was fabricated basically in the same manner as in Example 7. However, Comparative Example 3 is different from Example 7 in respect of the discharge capacity C1 of the positive electrode, the discharge capacity ratio X, and the coating weight of the negative electrode active material layer.

(6-6) Fabrication of Power Storage Device Negative Electrode of Comparative Example 5

A power storage device negative electrode of Comparative Example 5 was fabricated basically in the same manner as in Example 7. However, Comparative Example 5 is different from Example 7 in respect of the aperture ratio of the negative electrode current collector. In Comparative Example 5, the negative electrode current collector comprises through-holes. The average diameter size of the through-holes is 90 $\mu$m. The average value of intervals between the through-holes is 147 $\mu$m. Since Comparative Example 5 had a high aperture ratio of the negative electrode current collector, the electrode was broken during formation of the negative electrode active material layer.

(6-7) Fabrication of Power Storage Device Negative Electrode of Comparative Example 6

A power storage device negative electrode of Comparative Example 6 was fabricated basically in the same manner as in Comparative Example 5. However, Comparative Example 6 is different from Comparative Example 5 in that the thickness of the negative electrode current collector was 10 $\mu$m.

(6-8) Evaluation of Power Storage Device Negative Electrode

Evaluation was performed in the case when the power storage device negative electrodes of Examples 7 to 11 and Comparative Examples 4 to 6 were used for the lithium ion capacitor. Specifically, the initial capacity, the initial resistance, after 100,000-cycle capacity retention rate (%), and presence of Li precipitation were evaluated. The results are shown in the above Table 3. The evaluation methods are as follows.

(Fabrication of Cell for Evaluation)

Fifteen pieces of negative electrodes in dimensions of 10.0 cm $\times$ 13.0 cm (excluding terminal welded portions) were cut out. Furthermore, fourteen pieces of positive electrodes in dimensions of 9.7 cm $\times$ 12.5cm (excluding terminal welded portions) were cut out. The positive electrode current collector was made of an aluminum foil. The thickness of the positive electrode current collector was 12 $\mu$m. The aperture ratio of the positive electrode current collector was 0%.
Positive electrode primer layers were formed on both sides of the positive electrode current collector. On the positive electrode primer layers, positive electrode active material layers were further formed. The positive electrode active material layers had a thickness of 144 $\mu$m. The positive electrode active material layers were formed along the longitudinal direction of the negative electrode current collector 93.
The positive electrodes and the negative electrodes were alternately stacked with separators, which were made of a polyethylene nonwoven fabric having a thickness of 35 $\mu$m, interposed therebetween to make an electrode laminate. At this time, the terminal welded portions of the positive electrode current collectors and the terminal welded portions of the negative electrode current collectors were positioned on opposite sides. Furthermore, the negative electrodes were placed in the outermost of the electrode laminate.
Subsequently, the respective separators were placed in the uppermost portion and the lowermost portion of the electrode laminate, and the four sides of the electrode laminate were taped. Then, the terminal welded portion of each of the fourteen positive electrode current collectors was ultrasonic-welded to an aluminum positive terminal. The terminal welded portion of each of fifteen negative electrode current collectors was resistance-welded to a nickel negative terminal.
Subsequently, the electrode laminate was placed inside of the laminate film, and the opening portion of the laminate film was covered with another laminate film to fusion-bond three sides of the laminate film. Then, following the vacuum impregnation of the inside of the laminate films with the electrolyte solution, the remaining one side of the laminae films, which had been open, was fusion bonded. The electrolyte solution was a mixed solution that contains 1.2M of $LiPF_6$, and ethylene carbonate, ethyl methyl carbonate, and dimethyl carbonate at a volume ratio of 3:4:3. Through the above processes, a cell for evaluation was completed.

(Initial Evaluation)

The cell made for evaluation was charged at a constant current of 7 A until the cell voltage became 3.8 V, and was thereafter charged at a constant voltage of 3.8 V for 30 minutes. Then, the cell for evaluation was discharged at a constant current of 7 A until the cell voltage became 2.2 V. A cycle test, in which the above-described cycle was repeated, was performed, and the discharge capacity at the second discharge was measured. A value obtained by dividing the measured value by the total area of the positive electrode active material layers and the negative electrode active material layers was defined as the initial discharge capacity per unit active material area. Furthermore, a value obtained by dividing the voltage difference between the voltage immediately before the initiation of the second discharge and the voltage three seconds after the initiation of the discharge by the discharge current value was measured. Tis measured value was defined as the initial resistance. The initial resistance is a direct current internal resistance of the cell.

(After 100,000-cycle Capacity Retention Rate)

Subsequently, the cell for evaluation was charged at a constant current of 70 A until the voltage became 3.8 V. Then, the cell for evaluation was discharged at a constant current of 70 A until the cell voltage became 2.2 V. The above cycle was repeated 100,000 cycles.
Subsequently, the cell for evaluation was charged at a constant current of 7 A until the cell voltage became 3.8 V, and was thereafter charged at a constant voltage of 3.8 V for 30 minutes. Then, the cell for evaluation was discharged at a constant current of 7 A until the cell voltage became 2.2 V. A cycle test, in which the above-described cycle was repeated, was performed, and the cell capacity at the second discharge was defined as a discharge capacity after 100,000 cycles. The after 100,000-cycle capacity retention rate (%) was obtained based on Formula (8) below.

$$\text{Formula (8): after 100,000-cycle capacity retention rate (\%)} =$$
$$\text{(discharge capacity after 100,000 cycles/ initial discharge capacity)}$$
$$\times 100$$

(Evaluation of Li Precipitation)

After the above-described 100,000 cycles of charging and discharging, the cell for evaluation was disassembles to remove the power storage device negative electrodes. In each of the removed power storage device negative electrodes, the area of the range in which the lithium metal had been precipitated (hereinafter referred to as lithium precipitated area) was measured.
If there was no power storage device negative electrode with the lithium precipitated area of 5% or less, the negative electrodes were rated as "A"; if there was any power storage device negative electrode with the lithium precipitated area of 5% or more, the negative electrodes were rated as "B".
The lithium precipitated area (%) was obtained by Formula (9) below.

$$\text{Formula (9): lithium precipitated area (\%)} = \text{(lithium precipitated}$$
$$\text{area of power storage device negative electrode)/ (total area of power}$$
$$\text{storage device negative electrode)} \times 100$$

The evaluation results are shown in Table 4.

[Table 4]

|  | Initial Capacity Per Unit Area (mAh/cm$^3$) | Initial Resistance (m$\Omega$) | After 100,000-cycle Capacity Retention Rate (%) | Li Precipitation |
|---|---|---|---|---|
| Example 7 | 7.20 | 1.55 | 90.6 | A |
| Example 8 | 6.97 | 1.58 | 90.5 | A |

(continued)

|  | Initial Capacity Per Unit Area (mAh/cm$^3$) | Initial Resistance (mΩ) | After 100,000-cycle Capacity Retention Rate (%) | Li Precipitation |
|---|---|---|---|---|
| Example 9 | 8.14 | 1.60 | 90.0 | A |
| Example 10 | 10.35 | 1.60 | 90.0 | A |
| Example 11 | 10.71 | 1.60 | 90.0 | A |
| Comparative Example 4 | 7.86 | 1.64 | 71.0 | B |
| Comparative Example 5 | - | - | - | - |
| Comparative Example 6 | 8.04 | 1.78 | 89.1 | A |

The power storage device negative electrodes of Examples 7 to 11 had high initial capacities, low initial resistances, high after 100,000-cycle capacity retention rates, and no Li precipitation.

In contrast, the power storage device negative electrodes of Comparative Example 4 had low after 100,000-cycle capacity retention rate and Li precipitation. In the power storage device negative electrodes of Comparative Example 5, the electrodes were broken during formation of the negative electrode active material layers and therefore, evaluation using the cell could not be performed. The power storage device negative electrodes of Comparative Example 6 had large initial resistances.

7. Other Embodiments

Although embodiments of the present disclosure have been described above, the present disclosure is not limited to the above-described embodiments, but can be practiced in variously modified forms.

(1) Functions of one component in each of the above-described embodiments may be distributed to two or more components; a function of two or more components may be achieved by one component. One part of the configuration of each of the above-described embodiments may be omitted. At least a part of the configuration of each of the above-described embodiments may be added to or replaced with configurations of other embodiments described above. Any mode included in the technical ideas identified by the wordings in the claims are embodiments of the present disclosure.

(2) In addition to the above-described power storage device, the present disclosure can be achieved in various forms such as a system comprising the power storage device as a component.

**Claims**

1. A lithium ion rechargeable battery comprising:

   an electrode assembly comprising:

      a positive electrode; and
      a negative electrode; and

   an electrolyte,
   wherein the negative electrode comprises a negative electrode current collector and a negative electrode active material layer formed on a surface of the negative electrode current collector,
   wherein the negative electrode is doped with lithium,
   wherein an aperture ratio of the negative electrode current collector is 0% or higher and 0.1% or lower,
   wherein a discharge capacity ratio X is greater than 0, and 0.9 or lower, the discharge capacity ratio X being defined by Formula (1): X = C1/ C2,
   wherein C1 in the Formula (1) is a discharge capacity of a cell when the cell is charged and discharged at a cell voltage between 2.0 V and voltage of 4.3 V, and
wherein C2 in the Formula (1) is a discharge capacity of the negative electrode when the negative electrode is charged and discharged between 0V vs. Li/Li+ and 3V vs. Li/Li+.

2. The lithium ion rechargeable battery according to claim 1,
wherein a discharge capacity ratio Y is 0.7 or higher and 1 or lower, the discharge capacity ratio Y being defined by Formula (2): $Y = C3/ C2$,
wherein C2 in the Formula (2) is the same as the discharge capacity C2 of the negative electrode in the Formula (1), and
wherein C3 in the Formula (2) is a discharge capacity C3 of the negative electrode when the negative electrode is discharged, the negative electrode being removed from the cell that has been charged in a constant current-constant voltage mode at a cell voltage of 4.3 V.

3. The lithium ion rechargeable battery according to claim 1 or 2,
wherein the negative electrode active material layer contains a silicon-based material, and
wherein a content of the silicon-based material in the negative electrode active material layer is 5% by mass or more and 99% by mass or less.

4. The lithium ion rechargeable battery according to any one of claims 1 to 3,
wherein a coating weight of the negative electrode active material layer is 5 $g/m^2$ or more and 500 $g/m^2$ or less.

5. The lithium ion rechargeable battery according to any one of claims 1 to 4,
wherein a thickness of the negative electrode active material layer is 3 $\mu$m or lager and 300 $\mu$m or smaller.

6. The lithium ion rechargeable battery according to any one of claims 1 to 5,
wherein a ratio of doping the negative electrode active material layer with lithium is 5% or more and 95% or less relative to the C2.

7. A method of manufacturing a lithium ion rechargeable battery with an electrode cell, the method comprising:

   doping a negative electrode with lithium, the negative electrode comprising:

      a negative electrode current collector; and
      a negative electrode active material layer formed on a surface of the negative electrode current collector; and

   stacking the negative electrode, which has been doped with lithium, and a positive electrode to form the electrode cell,
   wherein an aperture ratio of the negative electrode current collector is 0% or higher and 0.1% or lower,
   wherein a discharge capacity ratio X is 0.2 or higher and 0.9 or lower, the discharge capacity ratio X being defined by Formula (1): $X = C1/ C2$,
   wherein C1 in the Formula (1) is a discharge capacity of a cell when the cell is charged and discharged at a cell voltage between 2.0 V and 4.3 V, and
   wherein C2 in the Formula (1) is a discharge capacity of the negative electrode when the negative electrode is charged and discharged between 0V vs. Li/Li+ and 3 V vs. Li/Li+.

8. A lithium ion capacitor comprising:

   an electrode assembly comprising:

      a positive electrode; and
      a negative electrode; and

   an electrolyte,
   wherein the negative electrode comprises a negative electrode current collector and a negative electrode active material layer formed on a surface of the negative electrode current collector,
   wherein the negative electrode is doped with lithium,
   wherein an aperture ratio of the negative electrode current collector is 0% or higher and 0.1% or lower,
   wherein a discharge capacity ratio X is 0.005 or higher and 0.2 or lower, the discharge capacity ratio X being defined by Formula (3): X = C1/ C2,

wherein C1 in the Formula (3) is a discharge capacity of a cell when the cell is charged and discharged at a cell voltage between 2.2 V and 3.8 V, and

wherein C2 in the Formula (3) is a discharge capacity of the negative electrode when the negative electrode is charged and discharged between 0V vs. Li/Li+ and 3V vs. Li/Li+.

9. The lithium ion capacitor according to claim 8,

wherein the negative electrode active material layer contains a silicon-based material, and

wherein a content of the silicon-based material in the negative electrode active material layer is 30% by mass or more and 99% by mass or less.

10. The lithium ion capacitor according to claim 8,

wherein the negative electrode active material layer contains a carbon-based material, and

a content of the carbon-based material in the negative electrode active material layer is 80% by mass or more and 99% by mass or less.

11. The lithium ion capacitor according to claim 10, wherein the carbon-based material is graphite-based particles.

12. The lithium ion capacitor according to any one of claims 9 to 11, wherein a ratio of doping the negative electrode active material layer with lithium is 30% or more and 95% or less of the C2.

13. A method of manufacturing a lithium ion capacitor with an electrode assembly including a negative electrode and an electrode different from the negative electrode and with an electrolyte, the method comprising:

doping the negative electrode with lithium; and

stacking the negative electrode, which has been doped with lithium, and the electrode different from the negative electrode to form the electrode assembly,

wherein the negative electrode comprises a negative electrode current collector and a negative electrode active material layer formed on a surface of the negative electrode current collector,

wherein an aperture ratio of the negative electrode current collector is 0% or higher and 0.1% or lower,

wherein a discharge capacity ratio X is 0.005 or higher and 0.2 or lower, the discharge capacity ratio X being defined by Formula (3): X = C1/ C2,

wherein C1 in the Formula (3) is a discharge capacity of a cell when the cell is charged and discharged at a cell voltage between 2.2 V and 3.8 V,

wherein C2 in the Formula (3) is a discharge capacity of the negative electrode when the negative electrode is charged and discharged between 0V vs. Li/Li+ and 3V vs. Li/Li+, and

wherein the unit of the C1 and the C2 is expressed in mAh/g.

FIG. 1

FIG. 2A

FIG. 2B

## INTERNATIONAL SEARCH REPORT

| International application No. |
|---|
| PCT/JP2019/016626 |

**A. CLASSIFICATION OF SUBJECT MATTER**
Int.Cl. H01M10/052(2010.01)i, H01G11/06(2013.01)i, H01G11/26(2013.01)i, H01G11/30(2013.01)i, H01G11/50(2013.01)i, H01G11/70(2013.01)i, H01G11/86(2013.01)i, H01M10/058(2010.01)i
According to International Patent Classification (IPC) or to both national classification and IPC

**B. FIELDS SEARCHED**

Minimum documentation searched (classification system followed by classification symbols)
Int.Cl. H01M10/052-10/058, H01M4/13-4/139, H01G11/06, H01G11/22-11/30, H01G11/50, H01G11/70, H01G11/86

Documentation searched other than minimum documentation to the extent that such documents are included in the fields searched
Published examined utility model applications of Japan      1922-1996
Published unexamined utility model applications of Japan      1971-2019
Registered utility model specifications of Japan      1996-2019
Published registered utility model applications of Japan      1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/126686 A1 (ASAHI KASEI CORPORATION) 27 July 2017, paragraphs [0001], [0020], [0021], [0058]-[0065], [0077], [0078], [0084]-[0095], [0196]-[0198], [0262]-[0264], [0288]-[0299], [0346], [0347], [0373]-[0377], [0403], table 7 & US 2019/0027319 A1, paragraphs [0001], [0097]-[0105], [0179]-[0200], [0215]-[0217], [0223]-[0245], [0408]-[0417], [0496]-[0505], [0529]-[0533], [0603]-[0607], [0635]-[0639], [0669], table 7 & JP 2018-061041 A & EP 3392891 A1 & KR 10-2018-0087421 A & CN 108475586 A & TW 201737541 A | 1-13 |

☒ Further documents are listed in the continuation of Box C.      ☐ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17.07.2019 | 30.07.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2019/016626

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-238885 A (FDK CORPORATION) 24 November 2011, paragraphs [0030]-[0039], fig. 1-3 (Family: none) | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018080711 A
- JP 2018163231 A
- JP 2007067105 A
- JP H07235330 B
- JP H09293499 B
- JP 2004266091 A
- JP 2004185810 A